(19) Europäisches Patentamt
European Patent Office
Office européen des brevets

(11) **EP 4 470 769 A1**

(12) **EUROPÄISCHE PATENTANMELDUNG**

(43) Veröffentlichungstag:
**04.12.2024 Patentblatt 2024/49**

(21) Anmeldenummer: **24176916.5**

(22) Anmeldetag: **21.05.2024**

(51) Internationale Patentklassifikation (IPC):
*B32B 15/01* (2006.01)    *C22C 38/02* (2006.01)
*C22C 38/04* (2006.01)    *C22C 38/06* (2006.01)
*C22C 38/12* (2006.01)    *C22C 38/14* (2006.01)
*C22C 38/22* (2006.01)    *C22C 38/26* (2006.01)
*C22C 38/28* (2006.01)    *C22C 38/32* (2006.01)
*C22C 38/38* (2006.01)    *C23C 22/07* (2006.01)
*B21D 22/22* (2006.01)    *C21D 1/70* (2006.01)
*C23C 2/12* (2006.01)

(52) Gemeinsame Patentklassifikation (CPC):
**B32B 15/013; B21D 22/22; C21D 1/70;**
**C22C 38/02; C22C 38/04; C22C 38/06;**
**C22C 38/12; C22C 38/14; C22C 38/22;**
**C22C 38/26; C22C 38/28; C22C 38/32;**
**C22C 38/38; C23C 22/07;** C23C 2/12

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **02.06.2023 DE 102023114525**

(71) Anmelder: **ThyssenKrupp Steel Europe AG**
**47166 Duisburg (DE)**

(72) Erfinder:
- **Altgassen, Christian**
  **47166 Duisburg (DE)**
- **Dohr, Robin**
  **47166 Duisburg (DE)**
- **Köyer, Maria**
  **47166 Duisburg (DE)**
- **Stang, Michael**
  **47166 Duisburg (DE)**

(74) Vertreter: **ThyssenKrupp Steel Europe AG**
**Patente/Patent Department**
**Kaiser-Wilhelm-Straße 100**
**47166 Duisburg (DE)**

(54) **STAHLFLACHPRODUKT MIT UNTERSCHIEDLICHEN DICKEN ZUR HERSTELLUNG EINES STAHLBAUTEILS DURCH WARMUMFORMEN, SOWIE HERSTELLUNGSVERFAHREN DAFÜR**

(57) Die Erfindung betrifft ein Stahlflachprodukt zur Herstellung eines Stahlbauteils durch Warmumformen. Dabei umfasst das Stahlflachprodukt ein Stahlsubstrat, das aus einem Stahl, der 0,1-3 Gew.-% Mn und optional bis zu 0,01 Gew.-% B aufweist, besteht, und einen auf dem Stahlsubstrat aufliegenden Korrosionsschutzüberzug auf Aluminium-Basis. Weiterhin weist das Stahlflachprodukt einen ersten Bereich mit einer ersten Dicke $d_i$ und einen zweiten Bereich mit einer zweiten Dicke $d_2$ auf, wobei die zweite Dicke größer ist als die erste Dicke. Zudem ist auf dem Korrosionsschutzüberzug im zweiten Bereich eine Absorptionsschicht angeordnet, sodass der mittlere Reflexionsgrad $\overline{R}$ im Infrarotbereich im zweiten Bereich kleiner ist als im ersten Bereich. Weiterhin betrifft die Erfindung ein Verfahren zur Herstellung eines solchen Stahlflachproduktes durch bereichsweises Abwalzen.

EP 4 470 769 A1

**Beschreibung**

Die Erfindung betrifft ein Stahlflachprodukt zur Herstellung eines Stahlbauteils durch Warmumformen, umfassend ein Stahlsubstrat, das aus einem Stahl, der 0,1 - 3 Gew.-% Mn und optional bis zu 0,01 Gew.-% B aufweist, besteht, und einen auf dem Stahlsubstrat aufliegenden Korrosionsschutzüberzug auf Aluminium-Basis.

Unter dem Begriff "Stahlflachprodukt" werden hier alle Walzprodukte, deren Länge sehr viel größer ist als ihre Dicke, verstanden. Hierzu zählen Stahlbänder und -bleche sowie daraus gewonnene Zuschnitte und Platinen.

Beim Warmumformen, auch Warmformen, Presshärten oder Warmpressformhärten genannt, werden Stahlflachprodukte, beispielsweise Stahlplatinen, die von kalt- oder warmgewalztem Stahlband abgeteilt sind, auf eine in der Regel oberhalb der Austenitisierungstemperatur (AC3) des jeweiligen Stahls liegende Verformungstemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Stahlsubstrat ein Härtegefüge ergibt. Das Gefüge wird in ein zumindest teilweise martensitisches Gefüge umgewandelt. Es ergibt sich also ein gehärtetes Stahlbauteil.

Für einige Anwendungszwecke ist es vorteilhaft, beschichtete Stahlflachprodukte in einzelnen Bereichen auf geringere Dicke zu walzen als in anderen Bereichen und daraus dann entsprechende Blechzuschnitte mit unterschiedlichen Walzgraden und damit unterschiedlichen Dicken zu entnehmen. Dadurch lassen sich gewichtsoptimierte und belastungsangepasste Bauteile erzeugen. In der WO 2019/076720 A1 sind beispielsweise die Verarbeitungsbedingungen für solche Stahlflachprodukte offenbart.

Die Erwärmung des Stahlflachproduktes erfolgt typischerweise in einem vorgeheizten Rollenherdofen, den das Stahlflachprodukt durchläuft.

Aus der WO 2012/120081 A2 sind Stahlflachprodukte mit verschiedene Korrosionsschutzüberzügen bekannt. Zur Verbesserung des Aufheizverhaltens werden dort verschiedene Deckschichten vorgeschlagen.

Weist das Stahlflachprodukt nun dickere und dünnere Bereiche auf, so kommt es zu unterschiedlich schneller Erwärmung in den unterschiedlichen Bereichen. Dies führt zu mehreren Problemen. Zum einen werden die dünneren Bereiche unnötig lange weiter erwärmt, was einen unnötigen Energieeinsatz bedeutet. Zum anderen dient die Erwärmung auch dazu einen Diffusionsprozess in Gang zu setzen, bei dem Eisen aus dem Stahlsubstrat in den aluminiumbasierten Korrosionsschutzüberzug diffundiert. Erwärmen sich die unterschiedlichen Bereiche des Stahlflachproduktes unterschiedlich schnell, so ist dieser Diffusionsprozess bei Entnahme aus dem Ofen unterschiedlich weit fortgeschritten. Damit unterscheidet sich die Zusammensetzung des Korrosionsschutzüberzuges in den unterschiedlichen Bereichen. Im Ergebnis unterscheiden sich einige Eigenschaften wie Stärke des Korrosionsschutzes oder Schweißeignung in den verschiedenen Bereichen.

Aufgabe der vorliegenden Erfindung ist daher diese Nachteile zu vermeiden und ein Stahlflachprodukt zur Verfügung zu stellen, dass trotz unterschiedlicher Dicken ein möglichst homogenes Erwärmungsverhalten zeigt.

Diese Aufgabe wird gelöst durch ein Stahlflachprodukt zur Herstellung eines Stahlbauteils durch Warmumformen, umfassend ein Stahlsubstrat, das aus einem Stahl, der 0,1-3 Gew.-% Mn und optional bis zu 0,01 Gew.-% B aufweist, besteht, und einen auf dem Stahlsubstrat aufliegenden Korrosionsschutzüberzug auf Aluminium-Basis. Dabei weist das Stahlflachprodukt einen ersten Bereich mit einer ersten Dicke $d_1$ und einen zweiten Bereich mit einer zweiten Dicke $d_2$ auf, wobei die zweite Dicke größer ist als die erste Dicke. Weiterhin ist auf dem Korrosionsschutzüberzug im zweiten Bereich eine Absorptionsschicht angeordnet, sodass der mittlere Reflexionsgrad $\overline{R}$ im Infrarotbereich im zweiten Bereich kleiner ist als im ersten Bereich.

Der Korrosionsschutzüberzug auf Aluminium-Basis kann einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Die Absorptionsschicht im zweiten Bereich führt dazu, dass der Reflexionsgrad $\overline{R}$ im Infrarotbereich absinkt, also dem Bereich des Strahlungsspektrums, in dem das Ofeninnere Strahlung emittiert, die im Wesentlichen zur Aufheizung der Blechzuschnitte führt. Unter Infrarotbereich wird im Sinne dieser Anmeldung der Bereich der Wellenzahl von 1000 - 10000 cm$^{-1}$ verstanden. Dies entspricht dem Wellenlängenbereich von 1 - 10 $\mu$m. Im Ergebnis wird im zweiten Bereich ein größerer Anteil der Infrarotstrahlung absorbiert. Da dieser Bereich aber eine größere Dicke aufweist, wird mehr Energie zum Aufheizen dieses Bereiches benötigt. Es kommt also zum Angleichen der Aufheizraten im ersten und zweiten Bereich. Der Blechzuschnitt erwärmt sich also deutlich homogener, sodass auch die Diffusionsvorgänge in den verschiedenen Bereichen ähnlich schnell voranschreiten.

Die Absorptionsschicht liegt im zweiten Bereich auf dem Korrosionsschutzüberzug und grenzt unmittelbar an diesen an. Insbesondere ist die Absorptionsschicht eine Deckschicht, die den auf dem erfindungsgemäßen Stahlflachprodukt ausgebildeten Schichtaufbau auf jeder seiner außenliegenden Seiten abschließt.

Der Reflexionsgrad $\overline{R}$ im Infrarotbereich wird im Sinne dieser Anmeldung bestimmt, indem ein Schwarzkörperstrahler als Referenz verwendet wird. Der Schwarzkörper hat dabei eine Temperatur von T=920°C, was einer mittleren Ofentemperatur entspricht. Es wird also die spektrale Strahlungsleistung $i_\lambda(T)$ des Schwarzkörperstrahlers bei der Temperatur T mit der gemessenen spektralen Reflektivität $\rho_\lambda$ multipliziert und über den Wellenlängenbereich integriert. Dieses Integral wird genormt auf die spektrale Strahlungsleistung integriert über den gleichen Wellenlängenbereich. Es gilt also

$$\bar{R}(T) = \frac{\int_{\lambda_1}^{\lambda_2} \rho_\lambda \cdot i_\lambda(T)\, d\lambda}{\int_{\lambda_1}^{\lambda_2} i_\lambda(T)\, d\lambda}$$

Dabei ergibt sich $i_\lambda(T)$ aus dem Planck'schen Strahlungsgesetz

$$i_\lambda(T) = 2\pi \frac{hc^2}{\lambda^5} \frac{1}{e^{\frac{hc}{\lambda k_B T}} - 1}$$

mit der Lichtgeschwindigkeit c, dem Planck'schen Wirkungsquantum h und der Boltzmann-Konstante $k_B$. Die Integration erfolgt jeweils über den Bereich der Wellenlänge, der den Wellenzahlen von 1000 - 10000 cm$^{-1}$ entspricht, d.h. von $\lambda_1$ = 1 $\mu m$ bis $\lambda_2$ = 10 $\mu m$. Der im nachfolgenden verwendete Reflexionsgrad $\bar{R}$ ist definiert als $\bar{R}(920°C)$.

Bei einer bevorzugten Ausführungsvariante ist der der Reflexionsgrad $\bar{R}$ im Infrarotbereich im zweiten Bereich kleiner als 0,55, bevorzugt kleiner als 0,50, insbesondere kleiner als 0,40, bevorzugt kleiner als 0,35 und der Reflexionsgrad $\bar{R}$ im Infrarotbereich ist im ersten Bereich größer als 0,55, bevorzugt größer als 0,60. Versuche haben gezeigt, dass mit diesen Werten eine ausreichende Angleichung der Aufheizraten bewirkt wird.

Bei einer ersten Variante der Erfindung umfasst die Absorptionsschicht Kohlenstoffpartikel, insbesondere ausgewählt aus der Gruppe, bestehend aus Graphit, Fullerenen, Graphen, Kohlenstoffnanoröhren sowie deren Mischungen.

Im Sinne der Erfindung sind Kohlenstoffpartikel Partikel aus elementarem Kohlenstoff. Partikel im Sinne der Erfindung bestehen aus einem Feststoff und weisen einen hydrodynamischen Durchmesser von 1 bis 500 nm auf. Mehrere dieser Primärpartikel können zu Aggregaten mit einem hydrodynamischen Durchmesser von 50 bis 1000 nm verbunden sein. Typischerweise sind diese Aggregate zu weiteren Agglomeraten mit Durchmessern von 1 bis 100 $\mu$m zusammengeschlossen. Der hydrodynamische Durchmesser der Partikel wird mittels dynamischer Lichtstreuung (DLS) bestimmt.

Kohlenstoffpartikel haben den Vorteil, dass sich bereits bei Verwendung von kleinen Mengen in der Absorptionsschicht eine signifikante Absorption im Infrarotbereich, und damit eine Reduzierung der Reflektivität im Infrarotbereich ergibt. Gerade der Infrarotbereich ist der Bereich des Strahlungsspektrums, in dem das Ofeninnere Strahlung emittiert, die im Wesentlichen zum Aufheizen der Blechzuschnitte auf die Verformungstemperatur dient. Das Herabsetzen der Reflektivität des Stahlflachprodukts bzw. der Anstieg der Absorption im Infrarotbereich durch die Kohlenstoffpartikel umfassende Absorptionsschicht führt damit zu einer schnelleren Erwärmung des Stahlflachprodukts auf die Verformungstemperatur. Darüber hinaus wird die Absorptionsschicht, umfassend Kohlenstoffpartikel während des Warmumformens bei 920 °C nahezu vollständig verbrannt, sodass sich die Absorptionsschicht nicht nachteilig auf die Eigenschaften, wie beispielsweise Schweißbarkeit, Korrosionsneigung, Verzunderungsschutz sowie Lackierbarkeit, des aus dem Stahlflachprodukt nach dem Warmumformen erhaltenen Blechformteils auswirkt.

Zudem lässt sich eine gut haftende Absorptionsschicht mit Kohlenstoffpartikeln auf einfache Weise erzeugen, indem das Stahlflachprodukt in eine Kohlenstoffpartikel umfassende wässrige Dispersion eingetaucht oder mit einer solchen Dispersion besprüht oder im Coil-Coating-Verfahren oder mittels chemischer oder physikalischer Gasscheidenabscheidung (CVD oder PVD) belegt wird. Beim anschließenden Trocknen des Stahlflachproduktes kommt es an der Aluminium-haltigen Oberfläche des Korrosionsschutzüberzuges zur Bildung einer Absorptionsschicht mit Kohlenstoffpartikeln, die den stark reflektierenden Korrosionsschutzüberzug auf Aluminium-Basis verdeckt.

Es hat sich als besonders praxisgerecht erwiesen, wenn die Absorptionsschicht ein Auftragsgewicht (trocken) von 0,09 bis 10 g/m2, insbesondere 0,5 bis 5 g/m2, pro Seite des Stahlflachprodukts aufweist. Auftragsgewichte von weniger als 0,09 g/m2 weisen keine ausreichende Reduzierung des Absorptionsgrads auf, während bei Auftragsgewichten von mehr als 10 g/m2, insbesondere von mehr als 5 g/m2, eine Sättigung des Effekts eintritt. Das Aufbringen eines höheren Auftragsgewichts ist daher zwar möglich, aber unökonomisch.

Bei einer bevorzugten Variante des erfindungsgemäßen Stahlflachprodukts beträgt die Dicke der Absorptionsschicht 0,05 bis 5 $\mu$m. Unter der Dicke ist die Dicke pro Seite des Stahlflachprodukts zu verstehen. Als die beiden Seiten des Stahlflachproduktes werden die beiden sich gegenüberliegenden großen Flächen des Stahlflachproduktes bezeichnet. Die schmalen Flächen werden als Kanten bezeichnet. Bei beidseitig beschichteten Stahlflachprodukten mit Absorptionsschicht auf beiden Seiten beträgt also die Dicke auf jeder der beiden Seiten 0,05 bis 5 μm. Es hat sich gezeigt, dass bereits derartig geringe Dicken der Absorptionsschicht zu einer deutlichen Reduzierung des Reflexionsgrades führen.

Erfindungsgemäß umfasst die Absorptionsschicht Kohlenstoffpartikel. Der Anteil der Kohlenstoffpartikel in der trockenen Absorptionsschicht kann 10 - 99 Gew.-%, vorzugsweise 30 - 99 Gew.-%, besonders bevorzugt, 50 - 99 Gew.-% betragen. Der erfindungsgemäße Effekt tritt bereits bei sehr geringen Mengen an Kohlenstoffpartikeln in der Absorptionsschicht ein und verstärkt sich mit zunehmender Menge an Kohlenstoffpartikeln.

Gemäß einer bevorzugten Ausführungsform des erfindungsgemäßen Stahlflachprodukts weist die Absorptionsschicht mindestens ein Tensid auf. Das Vorhandensein des mindestens einen Tensids führt zu einer verbesserten Benetzbarkeit der Absorptionsschicht auf dem Korrosionsschutzüberzug.

Geeignete Tenside sind beispielsweise anionische, kationische, zwitterionische und nichtionische Tenside sowie deren Mischungen.

Gemäß einer bevorzugten Ausführungsform des erfindungsgemäßen Stahlflachprodukts ist das mindestens eine Tensid ausgewählt aus der Gruppe, bestehend aus Alkylsulfaten, Alkylsulfonaten, Alkylphosphonaten, alkoxylierten Fettalkohlen, alkoxylierten Fettsäuren, alkoxylierten Fettsäureaminen, alkoxylierten Alkylphenolen, oder Alkylpolyglycosiden.

Es hat sich als besonders praxisgerecht erwiesen, wenn das "Alkyl" der vorgenannten Alkylsulfate, Alkylsulfonate, Alkylphosphonate, Alkylphenole und/oder Alkylpolyglycoside eine Kettenlänge von 8 bis 22 Kohlenstoffatomen aufweist.

Bevorzugt werden alkoxylierte Fettalkohole, Fettsäuren, und/oder Fettsäureamine eingesetzt, die eine Alkylkettenlänge von 6 bis 22 Kohlenstoffatomen aufweisen.

Die alkoxylierten Fettalkohole, Fettsäuren, Fettsäureamine und/oder Alkylphenole können ethoxylierte, propoxylierte oder butoxylierte Fettalkohole, Fettsäuren, Fettsäureamine und/oder Alkylphenole sein. Dabei kann der Ethoxylierungs-, Propoxylierungs- oder Butoxylierungsgrad von 1 - 18, bevorzugt von 3 - 10, betragen.

Der Anteil des mindestens einen Tensids an der trockenen Absorptionsschicht beträgt 0,01 bis 5 Gew.-%, insbesondere von 0,5 bis 2 Gew.-%. Ein Mindestgehalt von 0,01 Gew.-% hat sich als erforderlich erwiesen, um die Benetzbarkeit des Korrosionsschutzüberzugs auf Aluminium-Basis zu gewährleisten. Ein Anteil von mehr als 5 Gew.-% Tensid in der Absorptionsschicht führt zu keiner weiteren Verbesserung der Benetzbarkeit und ist daher aus ökonomischen Gesichtspunkten nicht sinnvoll.

Um neben der Benetzbarkeit der Blechoberfläche zusätzlich die Haftung der Absorptionsschicht auf dem Korrosionsschutzüberzug auf Aluminium-Basis zu verbessern, kann die Absorptionsschicht neben dem Tensid ferner mindestens ein Polymer enthalten. Geeignete Polymere sind beispielsweise Polyalkylenglycole sowie deren Mischungen.

Gemäß einer bevorzugten Ausführungsform des erfindungsgemäßen Stahlflachprodukts ist das mindestens eine Polymer ausgewählt aus Polyethlyenglycolen oder Polypropylenglycolen. Gute Ergebnisse ließen sich dabei insbesondere mit Polyethylenglycolen oder Polypropylenglycolen erzielen, deren Molekulargewicht im Bereich von 400 bis 5000 g/mol liegt.

Der Anteil des mindestens einen Polymers an der trockenen Absorptionsschicht kann 1 bis 90 Gew.-% betragen. Dabei ist ein Mindestgehalt von 1 Gew.-% erforderlich, um die genannte vorteilhafte Haftungsverbesserung zu erhalten. Die Zugabe von mehr als 90 Gew.-% wirkt sich nachteilig auf den Reflexionsgrad und die Trocknung der Beschichtung aus.

Weitere Details zu einer Absorptionsschicht mit Kohlenstoffpartikeln finden sich in der Anmeldung DE 10 2022 127 696.1, die hiermit per Verweis einbezogen wird.

Bei einer zweiten Variante der Erfindung umfasst die Absorptionsschicht Lithium Aluminium Hydroxide, insbesondere Lithiumhydrotalkit ($[LiAl_2(OH)_6]_2(CO_3) \cdot 4H_2O$).

Im Sinne der Erfindung sind Lithium Aluminium Hydroxide Mischhydroxide bzw. Doppelhydroxide, bei den sich in der Kristallstruktur Metallkationen Hydroxidionen mit dem jeweiligen Nachbarn teilen. Die positive Überschussladung wird durch Anionen kompensiert.

Bei diesen Anionen handelt es sich bevorzugt um Carbonat-Anionen. Letztere werden als Hydroxycarbonate oder Hadroxidcarbonate bezeichnet, Die Absorptionschicht umfasst also bevorzugt Carbonate der Lithium Aluminium Hydroxide, insbesondere Lithiumhydrotalkit.

Lithiumhydrotalkit ist die vereinfachte Bezeichnung für Lithiumaluminiumhydroxidcarbonat mit der chemischen Formel $[LiAl_2(OH)_{612}(CO_3) \cdot 4H_2O$.

insbesondere liegt das Lithiumhydrotalkit in kristalliner Form vor.

In einer speziellen Alternative der Erfindung bilden die Lithium Aluminium Hydroxide in der Kristallstruktur Schichten mit Zwischenschichten aus Anionen, die Kristallwasser enthalten können. Die $H_2O$ Moleküle in der Zwischenschicht stabilisieren die Verknüpfung der Schichten über Wasserstoffbrücken.

Insbesondere besteht die Absorptionsschicht aus 80 Gew.-% bis 100 Gew.-% Lithiumhydrotalkit oder zu 80 Gew.-% bis 100 Gew.-% aus einer Mischung von Lithiumhydrotalkit und Hydrotalkit und jeweils optionalen Bestandteilen, deren Gehalte in Summen nicht mehr als 20 Gew.-% betragen.

Lithium Aluminium Hydroxide, insbesondere deren Carbonate, bevorzugt Lithiumhydrotalkit, haben den Vorteil, dass sich bereits bei kleinen Mengen eine signifikante Absorption im Infratrotbereich und damit eine Reduzierung der Reflektivität im Infratrotbereich ergibt, also dem Bereich des Strahlungsspektrums, in dem das Ofeninnere Strahlung emittiert, die im Wesentlichen zur Aufheizung der Blechzuschnitte führt. Zudem führen auf Lithium basierende Salzschichten zu einer Passivierung der Oberfläche und damit zu einem verbesserten Korrosionsschutz.

Zudem lässt sich eine gut haftende Absorptionsschicht mit Lithium Aluminium Hydroxiden auf einfache Weise erzeugen, indem das Stahlflachproduktes in eine Lithiumcarbonat ($Li_2CO_3$) umfassende wässrige Lösung eingetaucht oder mit einer solchen Lösung besprüht oder im Coil-Coating-Verfahren belegt wird. Beim anschließenden Trocknen des Stahlflachproduktes kommt es an der aluminiumhaltigen Oberfläche des Korrosionsschutzüberzuges zur Bildung von Lithiumhydrotalkit-Kristallen. Es bildet sich also eine Absorptionsschicht mit Lithiumhydrotalkit-Kristallen.

Bei einer bevorzugten Ausgestaltung dieser Variante beträgt das Auflagengewicht der Absorptionsschicht 20 - 750 mg/m². Unter dem Auflagengewicht ist das Auflagengewicht pro Seite zu verstehen. Bei beidseitig beschichteten Stahlflachprodukten mit Absorptionsschicht auf beiden Seiten beträgt also das Auflagengewicht auf jeder der beiden Seiten 20 - 750 mg/m². Es hat sich gezeigt, dass bereits derartig niedrige Auflagengewichte zu einer deutlichen Reduzierung des Reflexionsgrades führen.

Weitere Details zu einer Absorptionsschicht mit Lithium Aluminium Hydroxide finden sich in der Anmeldung DE 10 2021 128 545.3, die hiermit per Verweis einbezogen wird.

Bei einer dritten Variante der Erfindung umfasst die Absorptionsschicht Metallphosphate, wobei der Bedeckungsgrad mit Metallphosphaten bevorzugt mindestens 10% beträgt.

Der Bedeckungsgrad wird mittels Rasterelektronenmikroskop (REM) bestimmt. Hierzu wird an mindestens 5 verschiedenen Positionen von der Oberfläche ein REM-Bild mit der Größe von 1x1 mm aufgenommen. Flächen ohne Phosphatkristalle, die einen Durchmesser >10 μm haben, gelten als nicht belegt. Alle anderen Flächen werden als belegt definiert. Der Bedeckungsgrad ist definiert als (nicht belegte Fläche)/(belegte Fläche) und in % angegeben und als Mittelwert aus den 5 Positionen zu bestimmen.

In einer besonderen Ausführungsform beträgt der Bedeckungsgrad mit Metallphosphaten auf der Oberfläche des Stahlflachproduktes mindestens 10%, bevorzugt 25 % besonders bevorzugt 30%. Insbesondere kann aus prozesstechnischen Gründen der Bedeckungsgrad auf maximal 90%, bevorzugt 79% besonders bevorzugt 72% begrenzt sein. In einer weiteren besonderen Ausführungsform liegt der Bedeckungsgrad bei mindestens 72 %, bevorzugt 80%, besonders bevorzugt 85%.

Der hohe Bedeckungsgrad fördert eine homogene Aufheizung des Stahlflachproduktes. Bei einem niedrigeren Bedeckungsgrad kann es während der Erwärmung kurzeitig lokal zu unterschiedlichen Temperaturen kommen, da die lokale Reflektivität an nicht mit Metallphosphaten bedeckten Stellen geringer ist als an den Stellen, die mit Metallphosphaten bedeckt sind.

Weitere Details zu einer Absorptionsschicht, die Metallphosphate umfasst, findet sich in der Anmeldung EP-Anmeldung mit der Anmeldenummer 23 164 640.7 vom 28.03.2023, die hiermit per Verweis einbezogen wird.

Bei einer bevorzugten Variante beträgt die erste Dicke maximal 2,5 mm, bevorzugt maximal 2,0 mm, insbesondere maximal 1,5 mm. Weiterhin bevorzugt beträgt die zweite Dicke mindestens 2,0 mm, bevorzugt mindestens 2,5 mm, insbesondere mindestens 3,0 mm.

Ein solcher Korrosionsschutzüberzug wird bevorzugt durch Schmelztauchbeschichten des Stahlflachproduktes erzeugt. Dabei wird das Stahlflachprodukt durch eine flüssige Schmelze geführt, die aus bis 15 Gew.-% Si bevorzugt mehr als 1,0%, optional 2 - 4 Gew.-% Fe, optional bis zu 5 Gew.-% Alkali- oder Erdalkalimetalle, bevorzugt bis zu 1,0% Gew.-% Alkali- oder Erdalkalimetalle, und optional bis zu 15 % Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht. Bei einer bevorzugten Variante beträgt der Si-Gehalt der Schmelze 1,0 - 3,5 Gew.-% oder 7 - 12 Gew.-%, insbesondere 8 - 10 Gew.-%.

Ein solcher Korrosionsschutzüberzug wird bevorzugt durch Schmelztauchbeschichten des Stahlflachproduktes erzeugt. Dabei wird das Stahlflachprodukt durch eine flüssige Schmelze geführt, die aus 0,1 - 15 Gew.-% Si bevorzugt mehr als 1,0 Gew-% Si, optional 2 - 4 Gew.-% Fe, optional bis zu 5 Gew.-% Alkali- oder Erdalkalimetalle, bevorzugt bis zu 1,0 Gew.-% Alkali- oder Erdalkalimetalle, und optional bis zu 15 % Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht. Bevorzugt beträgt der optionale Gehalt an Alkali- oder Erdalkalimetallen mindestens 0,1 Gew.-%.

Bei einer bevorzugten Variante beträgt der Si-Gehalt der Schmelze 0,5 - 3,5 Gew.-% oder 7 - 12 Gew.-%, insbesondere 8 - 10 Gew.-%.

Bei einer bevorzugten Variante umfasst der optionale Gehalt an Alkali- oder Erdalkalimetallen in der Schmelze 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen. Weiterhin bevorzugt besteht der optionale Gehalt an Alkali- oder Erdalkalimetallen in der Schmelze aus 0,1 - 1,0 Gew.-% Mg, insbesondere 0,1 - 0,7 Gew.-% Mg, bevorzugt 0,1 - 0,5 Gew.-% Mg und optional mindestens 0,0015 Gew.-% Ca, insbesondere mindestens 0,01 Gew.-% Ca.

Beim Schmelztauchbeschichten diffundiert Eisen aus dem Stahlsubstrat in den flüssigen Überzug, sodass der Korrosionsschutzüberzug des Stahlflachproduktes beim Erstarren insbesondere eine Legierungsschicht und eine Al-Basisschicht aufweist.

Die Legierungsschicht liegt auf dem Stahlsubstrat auf und grenzt unmittelbar an dieses an. Die Legierungsschicht wird im Wesentlichen aus Aluminium und Eisen gebildet. Bevorzugt besteht die Legierungsschicht aus 25 - 50 Gew.-% Fe, 5 - 20 Gew.-% Si, optionalen weiteren Bestandteilen deren Gehalt in Summe auf höchstens 5,0 Gew.-%, bevorzugt 2,0 Gew.-%, beschränkt sind, und als Rest Aluminium. Die optionalen weiteren Bestandteile beinhalten insbesondere die übrigen Bestandteile der Schmelze (das heißt gegebenenfalls Alkali- oder Erdalkalimetalle, insbesondere Mg bzw. Ca) und die übrigen Anteile des Stahlsubstrates zusätzlich zu Eisen.

Bei einer weiteren Variante (Variante mit Si-Gehalt in der Schmelze von 0,5-3,5 Gew.-%) besteht die Legierungsschicht aus 25 - 50 Gew.-% Fe, 0,5 - 5,0 Gew.-% Si, optionalen weiteren Bestandteilen deren Gehalt in Summe auf höchstens 5,0 Gew.-%, bevorzugt 2,0 Gew.-%, beschränkt sind, und als Rest Aluminium. Die optionalen weiteren Bestandteile beinhalten auch hier insbesondere die übrigen Bestandteile der Schmelze (das heißt gegebenenfalls Alkali- oder Erdalkalimetalle, insbesondere Mg bzw. Ca) und die übrigen Anteile des Stahlsubstrates zusätzlich zu Eisen.

Die Al-Basisschicht liegt auf der Legierungsschicht und grenzt unmittelbar an diese an. Bevorzugt entspricht die Zusammensetzung der Al-Basisschicht der Zusammensetzung der Schmelze des Schmelzbades. Das heißt, sie besteht aus 1,0 - 15 Gew.-% Si, optional 2 - 4 Gew.-% Fe, optional zu 5 Gew.-% Alkali- oder Erdalkalimetalle, bevorzugt bis zu 1,0 Gew.-% Alkali- oder Erdalkalimetalle, optional bis zu 15 Gew.-% Zn und optionalen weiteren Bestandteilen, deren Gehalte in Summe auf höchstens 2,0 Gew.-% beschränkt sind, und als Rest Aluminium. Bevorzugte Zusammensetzungen der Al-Basisschicht entsprechen den bevorzugten Schmelzenzusammensetzungen.

Bei einer bevorzugten Variante der Al-Basisschicht umfasst der optionale Gehalt an Alkali- oder Erdalkalimetallen 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen. Weiterhin bevorzugt besteht der optionale Gehalt an Alkali- oder Erdalkalimetallen aus 0,1 - 1,0 Gew.-% Mg, insbesondere 0,1 - 0,7 Gew.-% Mg, bevorzugt 0,1 - 0,5 Gew.-% Mg und optional mindestens 0,0015 Gew.-% Ca, insbesondere mindestens 0,1 Gew.-% Ca.

Bei einer weiter bevorzugten Variante des Korrosionsschutzüberzuges ist der Si-Gehalt in der Legierungsschicht geringer als der Si-Gehalt in der Al-Basisschicht.

Der Korrosionsschutzüberzug hat bevorzugt eine Dicke von 5-60 $\mu$m, insbesondere von 10 bis 40 $\mu$m. Das Auflagengewicht des Korrosionsschutzüberzuges beträgt insbesondere $30 - 360\frac{g}{m^2}$ bei beidseitigen Korrosionsschutzüberzügen bzw. $15 - 180\frac{g}{m^2}$ bei der einseitigen Variante. Bevorzugt beträgt das Auflagengewicht des Korrosionsschutzüberzuges $100 - 200\frac{g}{m^2}$ bei beidseitigen Überzügen bzw. $50 - 100\frac{g}{m^2}$ für einseitige Überzüge. Besonders bevorzugt beträgt das Auflagengewicht des Korrosionsschutzüberzuges $120 - 180\frac{g}{m^2}$ bei beidseitigen Überzügen bzw. $60 - 90\frac{g}{m^2}$ für einseitige Überzüge.

Die Dicke der Legierungsschicht ist bevorzugt kleiner als 20 $\mu$m, besonders bevorzugt kleiner 16 $\mu$m, besonders bevorzugt kleiner 12 $\mu$m, insbesondere kleiner 10 $\mu$m. Die Dicke der Al-Basisschicht ergibt sich aus der Differenz der Dicken von Korrosionsschutzüberzug und Legierungsschicht. Bevorzugt beträgt die Dicke der Al-Basisschicht auch bei dünnen Korrosionsschutzüberzügen mindestens 1 $\mu$m.

Bei einer bevorzugten Variante umfasst das Stahlflachprodukt eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Bei der bevorzugten Variante mit 0,1 - 1,0 Gew.-% Mg in der Al-Basisschicht umfasst die Absorptionsschicht bevorzugt nicht nur Lithiumhydrotalkit, sondern zusätzlich Hydrotalkit $Mg_6Al_2[(OH)_{16}|CO_3] \cdot 4H_2O$. Hydrotalkit bildet sich, wenn das Stahlflachproduktes in eine Lithiumcarbonat ($Li_2CO_3$) umfassende wässrige Lösung eingetaucht oder mit einer solchen Lösung besprüht oder im Coil-Coating-Verfahren belegt wird und zudem der beschriebene Mg-Anteil in der Al-Basisschicht vorhanden ist. In einem solchen Fall umfasst die Absorptionsschicht eine Mischung von Hydrotalkit und Lithiumhydrotalkit. Insbesondere besteht die Absorptionsschicht zu 80 Gew.-% bis 100 Gew.-% aus einer Mischung aus Lithiumhydrotalkit und Hydrotalkit und optionalen Bestandteilen, deren Gehalte in Summen nicht mehr als 20 Gew.-% betragen. Bevorzugt beträgt der Anteil von Hydrotalkit an der Mischung von Hydrotalkit und Lithiumhydrotalkit mindestens 5 Gew.-%, bevorzugt mindestens 10 Gew.-%. Insbesondere beträgt der Anteil von Hydrotalkit an der Mischung von Hydrotalkit und Lithiumhydrotalkit maximal 90 Gew.-%, bevorzugt maximal 75 Gew.-%.

Die Erfindung betrifft zudem die Verwendung von Lithium Aluminium Hydroxide, insbesondere dessen Carbonate, bevorzugt Lithiumhydrotalkit, in einer Absorptionsschicht auf einem Korrosionsschutzüberzug auf Aluminium-Basis zur Reduzierung der Reflektivität im Infrarotbereich. Die Verwendung hat dabei die gleichen Vorteile, die vorstehend in Bezug auf das Stahlflachprodukt erläutert wurden. Weiterhin betrifft die Erfindung auch die Verwendung der vorstehend genannten speziell weitergebildeten Absorptionsschichten und insbesondere die Verwendung einer Mischung von Lithiumhydrotalkit und Hydrotalkit in einer Absorptionsschicht auf einem Korrosionsschutzüberzug mit 0,1 - 1,0 Gew.-% Mg in der Al-Basisschicht.

Das Stahlsubstrat ist aus einem Stahl, der 0,1 - 3 Gew.-% Mn und optional bis zu 0,01 Gew.-% B aufweist. Insbesondere ist das Gefüge des Stahls durch ein Warmumformen in ein martensitisches oder teilweise martensitisches Gefüge umwandelbar. Das Gefüge des Stahlsubstrates des Stahlbauteils ist also bevorzugt ein martensitisches oder zumindest teilweise martensitisches Gefüge, da dieses eine besonders hohe Härte aufweist.

Besonders bevorzugt ist das Stahlsubstrat ein Stahl, der neben Eisen und unvermeidbaren Verunreinigungen (in Gew.-%) aus

| | |
|---|---|
| C: | 0,04 - 0,45 Gew.-%, |
| Si: | 0,02 - 1,2 Gew.-%, |
| Mn: | 0,5 - 2,6 Gew.-%, |
| Al: | 0,02 - 1,0 Gew.-%, |
| P: | ≤ 0,05 Gew.-%, |
| S: | ≤ 0,02 Gew.-%, |
| N: | ≤ 0,02 Gew.-%, |
| Sn: | ≤ 0,03 Gew.-%, |
| As: | ≤ 0,01 Gew.-%, |
| Ca: | ≤ 0,005 Gew.-%, |

sowie optional einem oder mehreren der Elemente "Cr, B, Mo, Ni, Cu, Nb, Ti, V" in folgenden Gehalten

| | |
|---|---|
| Cr: | 0,08 - 1,0 Gew.-%, |
| B: | 0,001 - 0,010 Gew.-%, |
| Mo: | ≤ 0,5 Gew.-%, |
| Ni: | ≤ 0,5 Gew.-%, |
| Cu: | ≤ 0,2 Gew.-%, |
| Nb: | 0,01 - 0,2 Gew.-%, |
| Ti: | 0,01 - 0,10 Gew.-%, |
| V: | ≤ 0,3 Gew.-%, |
| W: | 0,001 - 1,00 %, |

besteht.

Bei den Elementen P, S, N, Sn, As, Ca handelt es sich um Verunreinigungen, die bei der Stahlerzeugung nicht vollständig vermieden werden können. Gelegentlich wird Ca auch bewusst zur Abbindung von Schwefel hinzulegiert. In einem solchen Fall beträgt der Gehalt von Ca mindestens 0,001 Gew.-%. Maximal beträgt der Ca-Gehalt auch in diesem Fall 0,005 Gew.-%.

Neben diesen Elementen können auch noch weitere Elemente als Verunreinigungen im Stahl vorhanden sein. Diese weiteren Elemente werden unter den "unvermeidbaren Verunreinigungen" zusammengefasst. Bevorzugt beträgt der Gehalt an unvermeidbaren Verunreinigungen in Summe maximal 0,2 Gew.-%, bevorzugt maximal 0,1 Gew.-%. Die optionalen Legierungselemente Cr, B, Nb, Ti, für die eine Untergrenze angegeben ist, können auch in Gehalten unterhalb der jeweiligen Untergrenze als unvermeidbare Verunreinigungen im Stahlsubstrat vorkommen. In dem Fall werden sie ebenfalls zu den unvermeidbaren Verunreinigungen gezählt, deren Gesamtgehalt auf maximal 0,2 Gew.-%, bevorzugt maximal 0,1 Gew.-% begrenzt ist. Bevorzugt sind die individuellen Obergrenzen für die jeweilige Verunreinigung dieser Elemente wie folgt:

Cr: ≤ 0,050 Gew.-%,
B: ≤ 0,0005 Gew.-%
Nb: ≤ 0,005 Gew.-%,
Ti: ≤ 0,005 Gew.-%

Dabei sind diese bevorzugten Obergrenzen als alternativ oder gemeinsam zu betrachten. Bevorzugte Varianten des Stahls erfüllen also eine oder mehrere dieser vier Bedingungen.

Bei einer eine bevorzugten Ausführungsform beträgt der C-Gehalt des Stahls maximal 0,37 Gew.-% und/oder mindestens 0,06 Gew.-%. Bei besonders bevorzugten Ausführungsvarianten liegt der C-Gehalt im Bereich von 0,06 - 0,09 Gew.-% oder im Bereich von 0,11 - 0,25 Gew.-% oder im Bereich von 0,32 - 0,37 Gew.-%.

Bei einer eine bevorzugten Ausführungsform beträgt der Si-Gehalt des Stahls maximal 1,00 Gew.-% und/oder mindestens 0,06 Gew.-%.

Der Mn-Gehalt des Stahls beträgt bei einer bevorzugten Variante maximal 2,4 Gew.-% und/oder mindestens 0,75 Gew.-%. Bei besonders bevorzugten Ausführungsvarianten liegt der Mn-Gehalt im Bereich von 0,75 - 0,85 Gew.-% oder im Bereich von 1,0 - 1,6 Gew.-%.

Der Al-Gehalt des Stahls beträgt bei einer bevorzugten Variante maximal 0,75 Gew.-%, insbesondere maximal 0,5 Gew.-%, bevorzugt maximal 0,25 Gew.-%. Alternativ oder ergänzend beträgt der Al-Gehalt bevorzugt mindestens 0,02 %.

Zudem hat sich gezeigt, dass es hilfreich sein kann, wenn die Summe der Gehalte von Silizium und Aluminium begrenzt sind. Bein einer bevorzugten Variante beträgt daher die Summe der Gehalte von Si und Al (üblicherweise bezeichnet als Si+Al) maximal 1,5 Gew.-%, bevorzugt maximal 1,2 Gew.-%. Ergänzend oder alternativ beträgt die Summe der Gehalte von Si und Al mindestens 0,06 Gew.-%, bevorzugt mindestens 0,08 Gew.-%.

Bei den Elementen P, S, N handelt es sich um typische Verunreinigungen, die bei der Stahlerzeugung nicht vollständig vermieden werden können. Bei bevorzugten Varianten beträgt der P-Gehalt maximal 0,03 Gew.-%. Unabhängig davon beträgt der S-Gehalt bevorzugt maximal 0,012 %. Zusätzlich oder ergänzend beträgt der N-Gehalt bevorzugt maximal 0,009 Gew.-%.

Optional enthält der Stahl zudem Chrom mit einem Gehalt von 0,08 - 1,0 Gew.-%. Bevorzugt beträgt der Cr-Gehalt maximal 0,75 Gew.-%, insbesondere maximal 0,5 Gew.-%.

Im Falle einer optionale Zulegierung von Chrom ist bevorzugt die Summe der Gehalte von Chrom und Mangan begrenzt. Die Summe beträgt maximal 3,3 Gew.-%, insbesondere maximal 3,15 Gew.-%. Weiterhin beträgt die Summe mindestens 0,5 Gew.-%, bevorzugt mindestens 0,75 Gew.-%.

Bevorzugt enthält der Stahl optional zudem Bor mit einem Gehalt von 0,001 - 0,005 Gew.-%. Insbesondere beträgt der B-Gehalt maximal 0,004 Gew.-%.

Optional kann der Stahl Molybdän mit einem Gehalt von maximal 0,5 Gew.-% enthalten, insbesondere maximal 0,1 Gew.-%.

Weiterhin kann der Stahl optional Nickel enthalten mit einem Gehalt von maximal 0,5 Gew.-%, bevorzugt maximal 0,15 Gew.-%.

Optional kann der Stahl zudem Kupfer enthalten mit einem Gehalt von maximal 0,2 Gew.-%, bevorzugt maximal 0,15 Gew.-%.

Zudem kann der Stahl optional eines oder mehrere der Mikrolegierungselemente Nb, Ti und V enthalten. Dabei beträgt der optionale Nb-Gehalt mindestens 0,01 Gew.-%, insbesondere mindestens 0,02 Gew.-% und maximal 0,2 Gew.-%, bevorzugt maximal 0,08 Gew.-%, bevorzugt maximal 0,04 Gew.-%. Der optionale Ti-Gehalt beträgt mindestens 0,01 Gew.-% und maximal 0,08 Gew.-%, bevorzugt maximal 0,04 Gew.-%. Der optionale V-Gehalt beträgt maximal 0,3 Gew.-%, bevorzugt maximal 0,2 Gew.-%, insbesondere maximal 0,1 Gew.-%, bevorzugt maximal 0,05 Gew.-%.

Im Falle einer optionale Zulegierung von mehreren der Elemente Nb, Ti und V ist bevorzugt die Summe der Gehalte von Nb, Ti und V begrenzt. Die Summe beträgt maximal 0,1 Gew.-%, insbesondere maximal 0,068 Gew.-%. Weiterhin beträgt die Summe bevorzugt mindestens 0,015 Gew.-%.

Wolfram (W) kann optional in Gehalten von 0,001 - 1,0 Gew.-% zur Verlangsamung der Ferritbildung hinzulegiert werden. Ein positiver Effekt auf die Härtbarkeit ergibt sich bereits bei W-Gehalten von mindestens 0,001 Gew.-%. Aus Kostengründen wird maximal 1,0 Gew.-% Wolfram hinzulegiert.

Die vorstehenden Erläuterungen zu bevorzugten Stahlsubstraten gelten selbstverständlich ebenso für die Stahlsubstrate in den nachfolgend beschriebenen Herstellungsverfahren.

Die Erfindung betrifft weiterhin ein Verfahren zur Herstellung eines Stahlflachproduktes, insbesondere eines Stahlflachproduktes wie vorstehend beschrieben, umfassend folgende Arbeitsschritte (in dieser Reihenfolge):

a) Bereitstellen eines Stahlflachproduktes umfassend ein Stahlsubstrat, das aus einem Stahl, der 0,1 - 3 Gew.-%

Mn und optional bis zu 0,01 Gew.-% B aufweist, besteht, und einen auf dem Stahlsubstrat aufliegenden Korrosionsschutzüberzug auf Aluminium-Basis,

b) Optionales Dressieren des Stahlflachproduktes,

c) Vollflächiges Aufbringen einer Absorptionsschicht auf den Korrosionsschutzüberzug,

d) Walzen des Stahlflachprodukt, wobei der Abwalzgrad in einem ersten Bereich mindestens 30 %, bevorzugt mindestens 50 %, beträgt und in einem zweiten Bereich kleiner ist als 30 %.

In Arbeitsschritt a) wird ein erfindungsgemäßes Stahlsubstrat mit der vorgegebenen Legierung und Beschichtung zur Verfügung gestellt. Das Stahlsubstrat wird mittels konventioneller Methoden hergestellt. Eine mögliche Ausführungsform ist die folgende:

Es wird zunächst eine Bramme oder Dünnbramme zur Verfügung gestellt, die mittels Brammenstrangguss oder Dünnbrammenstrangguss erzeugt werden kann. Dies Bramme oder Dünnbramme wird durchwärmt, optional vorgewalzt, warmgewalzt und optional gehaspelt. Dann wird das Stahlsubstrat entzundert, optional kaltgewalzt und optional geglüht.

Anschließend wird das Stahlsubstrat mit einem Korrosionsschutzüberzug in konventioneller Weise schmelztauchbeschichtet. Bevorzugt findet die Schmelztauchbeschichtung in einem kontinuierlichen Prozess statt.

In Arbeitsschritt b) wird das Stahlflachprodukt dressiert, um die Oberflächenrauigkeit zu verbessen. Erfindungsgemäß werden Dressiergrade von bis zu 3 %, bevorzugt bis zu 2 %, erreicht.

In Arbeitsschritt c) wird auf den Korrosionsschutzüberzug vollflächig eine Absorptionsschicht aufgebracht. Unter einem vollflächigen Aufbringen einer Absorptionsschicht auf den Korrosionsschutzüberzug ist zu verstehen, dass die Absorptionsschicht nicht nur bereichsweise aufgebracht wird, sondern im Wesentlichen auf die gesamte Fläche des Stahlflachproduktes. Dies bedeutet insbesondere, dass die Absorptionsschicht sowohl im ersten Bereich als auch im zweiten Bereich aufgebracht wird. Ein derartiges Aufbringen kann auf relativ einfache Weise beispielsweise mittels Eintauchen, Besprühen oder mittels Coil-Coating-Verfahren realisiert werden. Weitere Methoden sind nachfolgend in Bezug auf die besonderen Ausführungsvarianten erläutert.

In Arbeitsschritt d) wird das Stahlflachprodukt gewalzt (ggf. mittels mehrerer Walzstiche), wobei der Abwalzgrad in einem ersten Bereich mindestens 30 %, bevorzugt mindestens 50 %, beträgt und in einem zweiten Bereich kleiner ist als 30 %.

Unter dem Abwalzgrad AWG wird dabei der Quotient aus der Dickenabnahme beim Kaltwalzen ΔdKW durch die ursprüngliche Dicke d verstanden:

$$AWG = \Delta dKW/d$$

mit ΔdKW = Dickenabnahme beim Kaltwalzen in mm und d = Banddicke in mm vor dem Walzen, wobei sich die Dickenabnahme ΔdKW aus der Differenz der Dicke des Stahlflachprodukts vor dem Kaltwalzen zur Dicke des Stahlflachprodukts nach dem Kaltwalzen ergibt.

Die Erfinder haben erkannt, dass die aufgebrachte Absorptionsschicht überraschenderweise bei dem nachfolgenden Walzen (ggf. bestehend aus mehreren Walzstichen) mit einem gesamten Abwalzgrad von 30 % oder mehr wieder zerstört wird, während sie bei Abwalzgraden unterhalb von 30 % erhalten bleibt.

Im Ergebnis ergibt sich also ein Stahlflachprodukt mit einem ersten Bereich mit einer ersten Dicke $d_1$ und einen zweiten Bereich mit einer zweiten Dicke $d_2$, wobei die zweite Dicke größer ist als die erste Dicke. Der Bereich der ersten Dicke ist also mit einem Abwalzgrad von 30 % oder mehr gewalzt worden, während der Bereich der zweiten Dicke mit einem Abwalzgrad unterhalb von 30 % gewalzt worden ist. Da beim Walzen mit einem Abwalzgrad von unterhalb 30 % die Absorptionsschicht erhalten bleibt, weist das Stahlflachprodukt im zweiten Bereich eine Absorptionsschutzschicht auf dem Korrosionsschutzüberzug auf. Im ersten Bereich ist dagegen die Absorptionsschutzschicht durch das Walzen mit einem Abwalzgrad von 30 % oder mehr (insbesondere 50 % oder mehr) zerstört worden. Daher weist das Stahlflachprodukt im ersten Bereich lediglich Reste der ursprünglichen Absorptionsschicht auf. Diese Reste wirken sich allerdings nicht signifikant auf den mittlere Reflexionsgrad $\overline{R}$ im Infrarotbereich aus, sodass der mittlere Reflexionsgrad $\overline{R}$ im Infrarotbereich im zweiten Bereich kleiner ist als im ersten Bereich.

Dieses vollflächige Aufbringen der Absorptionsschicht vor dem Walzen ist wesentlich effizienter als das Stahlflachprodukt nach dem Walzen nur bereichsweise zu beschichten. Das Verfahren kann zudem problemlos in bestehende Prozesse integriert werden. Bereichsweises Walzen ist bereits ein gängiges Verfahren. Durch das hier erläuterte Aufbringen einer Absorptionsschicht vor dem Walzen ergibt sich automatisch ein Stahlflachprodukt nach dem Walzen, das in den dickeren Bereichen einen geringeren mittlere Reflexionsgrad $\overline{R}$ aufweist. Es muss kein zusätzlicher Prozess zum teilweisen Beschichten entwickelt werden.

Zudem hat sich bei der Erprobung ein weiterer Vorteil gezeigt. Durch das Aufbringen der Absorptionsschicht sinkt im Walzprozess der Verschleiß an der Walze, da die Absorptionsschicht überraschenderweise als Schmiermittel fungiert.

Bei einer ersten Variante der Erfindung umfasst das vollflächige Aufbringen der Absorptionsschicht die folgenden Teilschritte:

a) Optionales Reinigen des Stahlflachprodukts
b) Optionales Aktivieren des Stahlflachprodukts
c) Phosphatieren des Stahlflachprodukts mit einer Phosphatierungslösung
d) Optional alkalisches Reinigen des Stahlflachproduktes
e) Optional Beölen des Stahlflachprodukts

In Teilschritt a) wird das Stahlflachprodukt optional gereinigt. Ob dieser Schritt notwendig ist, hängt von der Bandsauberkeit und den verwendeten Dressiermitteln ab. In einer besonderen Ausführungsform kann das Reinigen mit einer Lösung, welche als Hauptbestandteile Natriumhydroxid und Wasser umfasst, erfolgen.

In Teilschritt b) kann das Stahlflachprodukt optional aktiviert werden. Die Aktivierungslösung führt dazu, dass auf der Oberfläche mehr Nukleationskeime für die spätere Phosphatierung vorhanden sind. Bevorzugt besteht die Aktivierungslösung aus Zinkphosphaten, da dann nach der anschließenden Phosphatierung eine höhere Zinkphosphatauflage erreicht werden kann, verglichen mit Aktivierungen aus anderen Phosphatverbindungen, wie z. B.: Titanylphosphate. Es können kommerziell verfügbare Aktivierungslösungen verwendet werden wie z. B die Aktivierungen ZL 6 oder V6513, insbesondere V6559 von Chemetall. Die verwendetet Aktivierungskonzentration beträgt mindestens 1 g/l, insbesondere mindestens 3 g/l, um ausreichend Nukleationskeime auf die Oberfläche aufzubringen. Oberhalb einer Konzentration von 10 g/l wurde keine signifikante Verbesserung festgestellt, daher ist die Aktivierungskonzentration auf 10 g/l begrenzt. Um weitere Ressourcen zu sparen, beträgt die Aktivierungsbadkonzentration insbesondere maximal 5 g/l.

In Teilschritt c) wird das Stahlflachprodukt mit einer Phosphatierungslösung phosphatiert, insbesondere mit einer nachfolgend erläuterten Phosphatierungslösung.

In Teilschritt d) wird das Stahlflachprodukt optional alkalisch gereinigt. Außerdem kann Stahlflachprodukt alternativ optional gespült werden. Dieser Reinigungsschritt kann dazu dienen, den Fluoridgehalt auf der Oberfläche zu reduzieren. Die Reduzierung kann gewünscht sein, um während der Warmumformung die Bildung einer giftigen HF-Atmosphäre zu verhindern.

In Teilschritt e) wird das Stahlflachprodukt optional beölt.

Die in Teilschritt c) verwendete Phosphatierungslösung hat bevorzugt die folgenden Eigenschaften:
Der pH-Wert der Phosphatierungslösung beträgt mindestens gleich 2,0, bevorzugt 2,5, besonders bevorzugt 2,8, und maximal 3,5, bevorzugt 3,4, besonders bevorzugt 3,3, insbesondere maximal 3,2. Bei zu niedrigem pH-Wert kann keine geschlossene Phosphatierungsschicht gebildet werden, da keine ausreichende pH-Wertänderung an der Oberfläche zur Kristallisation erreicht wird. Bei zu hohen pH-Werten ist die Lösung nicht stabil und es kommt zur Ausfällung von Metallphosphaten und es bildet sich keine geschlossene Schicht. Dadurch kann es zu einem Beizangriff an der Oberfläche kommen.

Die Zinkkonzentration in der Phosphatierungslösung beträgt dabei mindestens 1 g/l. Die maximale Zinkkonzentration beträgt 15 g/l. Die Nickelkonzentration beträgt mindestens 0,5 g/l und maximal 10 g/l in der Phosphatierungslösung.

In einer besonderen Ausführungsform kann die Zinkkonzentration und/oder der Nickelkonzentration durch eine Zugabe in Form von wasserlöslichen Salzen erhöht werden, sodass sich die Summe der Zinkkonzentration und der Nickelkonzentration in der Phosphatierungslösung mindestens 2,4 g/l, bevorzugt mindestens 7,5 g/l, besonders bevorzugt mindestens 7,8 g/l beträgt. Die Nickelkonzentration in der Phosphatierungslösung beträgt nach der optionalen Zugabe mindestens 4 g/l, bevorzugt 5 g/l, besonders bevorzugt mindestens 6 g/l. Die erhöhte Zinkkonzentration und/oder Nickelkonzentration führt dazu, dass das Zinkphosphatauflagengewicht (bzw. Nickelphosphatauflagengewicht) bei gleicher Phosphatierzeit um mindestens 100 % steigt. Im Umkehrschluss sind geringere Phosphatierzeiten erforderlich, um eine geschlossene Phosphatierungsschicht zu erhalten, wodurch ein höherer Durchsatz während der Phosphatierung möglich ist.

Fluoride sind in der Phosphatierungslösung mit mindestens 0,5 g/l F- enthalten. In einer besonderen Ausführungsform beträgt die Fluoridkonzentration mindestens 1,25 g/l F-, bevorzugt 1,66 g/l F-, was im Vergleich zur Phosphatierung mit niedrigeren Fluoridkonzentrationen zu einer Erhöhung des Schichtgewichts um mindestens 100% führt. Der Fluoridgehalt beträgt in der vorliegenden Erfindung maximal 3,8 g/L F-, bevorzugt 3 g/l F-, besonders bevorzugt 2,7 g/l F-.

Insbesondere können der Phosphatierungslösung Oxidationsmittel wie Dimethylsulfoxid oder Nitrate enthalten. In einer besonderen Ausführungsform beträgt die Nitratkonzentration mindestens 3 g/l, bevorzugt mindestens 10 g/l, besonders bevorzugt mindestens 12 g/l. Durch die Erhöhung der Nitratkonzentration verringert sich die Wasserstoffentwicklung während des Phosphatierungsschrittes und es kann sich eine homogenere Phosphatierungsschicht ausbilden.

In einer besonderen Ausführungsform kann der Phosphatierungslösung Polyethlyenglykol als Additiv zugegeben werden. Bei einer Zugabe, sodass sich eine Konzentration von mindestens 0,05 g/l, insbesondere 0,1 g/l einstellt, erhöht sich ebenfalls das Schichtgewicht bei gleicher Phosphatierungsdauer. Die Konzentration sollte auf 5 g/l, insbesondere 1 g/l begrenzt sein, da eine zu hohe Konzentration negative Eigenschaften auf die Phosphatierungsqualität hat.

Optional kann der Phosphatierungslösung Kupfer hinzugefügt werden. Das Kupfer kann in Form von wasserlösliche Kupfer-Salzen, insbesondere Kupfer-Carbonat und/oder Kupfer-Nitrat, zugegeben werden. Die Kupferkonzentration in der Phosphatierungslösung beträgt dann mindestens 0,01 g/l, bevorzugt 0,05 g/l. Aus dem Stand der Technik ist bekannt, dass bei AS Oberflächen Bereiche gibt, die die oberflächennahen Si-reichen Phasen aufweisen. In diesen Bereichen wirken die Si-reichen Phasen als Kristallisationsstellen, da die Si-reichen Phasen als sogenannte Mikrokathoden fungieren. Durch die Zugabe von Kupfer können auch die Kupferpartikel als zusätzliche Mikrokathoden agieren. Diese zusätzlichen Mikrokathoden befinden sich nun auch zwischen den Bereichen mit den Si-reichen Phasen an der Oberfläche. Dies führt dazu, dass sich eine homogenere Phosphatierungsschicht ausbildet und kürzere Phosphatierungszeiten für eine vollständige Phosphatierung ausreichend sind. Die Kupferzugabe sollte beschränkt werden, sodass sich maximal eine Konzentration von 0,5 g/l einstellt, da bei höheren Konzentrationen die Cu-Abscheidung eine effektive Phosphatabscheidung verhindert. Insbesondere sollte die Kupferzugabe außerdem aus Ressourcengründen auf maximal 0,1 g/l beschränkt werden.

Bei einer weiteren Variante der Erfindung umfasst das vollflächige Aufbringen der mindestens einen der folgenden Schritte:

a) Applizieren einer Lithiumcarbonat ($Li_2CO_3$) umfassenden wässrigen Lösung auf das Stahlflachprodukt, insbesondere Eintauchen des Stahlflachproduktes in eine Lithiumcarbonat umfassende wässrige Lösung oder
b) Besprühen des Stahlflachproduktes mit einer Lithiumcarbonat umfassenden wässrigen Lösung oder
c) Belegen des Stahlflachproduktes mit einer Lithiumcarbonat umfassenden wässrigen Lösung im Coil-Coating-Verfahren.

Durch diese Behandlung wird die wässrige Lösung mit Lithiumcarbonat gleichmäßig über die gesamte Oberfläche verteilt, sodass sich eine homogene flächendeckende Absorptionsschicht bildet, die Lithium Aluminium Hydroxide, insbesondere deren Carbonate, bevorzugt Lithiumhydrotalkit umfasst.

Durch diese Behandlung wird die wässrige Lösung mit Lithiumcarbonat gleichmäßig über die gesamte Oberfläche verteilt, sodass sich eine homogene flächendeckende Absorptionsschicht bildet, die Lithium Aluminium Hydroxide, insbesondere deren Carbonate, bevorzugt Lithiumhydrotalkit umfasst.

Bei einer bevorzugten Weiterentwicklung liegt der pH-Wert der wässrigen Lösung bei mindestens 11 und maximal 15, insbesondere bei maximal 13, bevorzugt bei maximal 12. Hierdurch ist sichergestellt, dass ausreichend $Li_2CO_3$ gelöst ist, sodass sich genügend Lithium Aluminium Hydroxide bilden können. Zudem führt der pH-Wert in diesem Bereich zu einer guten Benetzbarkeit und damit zu einer besonders gleichmäßigen Verteilung.

Insbesondere enthält die wässrige Lösung 0 bis 20 g/L $Li_2CO_3$. Bevorzugt beträgt der Gehalt an $Li_2CO_3$ mindestens 5 g/L. Weiterhin bevorzugt beträgt der Gehalt an $Li_2CO_3$ maximal 15 g/L. Optional kann die Lösung LiOH enthalten. Der Gehalt an LiOH beträgt insbesondere 0 - 10 g/L. Bevorzugt beträgt der Gehalt an LiOH mindestens 1 g/L. Weiterhin bevorzugt beträgt der Gehalt an LiOH maximal 5 g/L.

Bei einer bevorzugten Weiterbildung enthält die wässrige Lösung zusätzlich ein Oxidationsmittel zur Verbesserung der Homogenität und als Beschleuniger der Reaktion. Das Oxidationsmittel ist bevorzugt Nitrat mit einer Konzentration von 0.1 - 15 g/L, bevorzugt 2 - 10 g/L oder Chlorat in der Konzentration 0.05 - 2 g/L, bevorzugt 0.2 - 1.5 g/L hinzugefügt werden. Als Nitrate und Chlorate sind jeweils die Salze der Alkalimetalle, bevorzugt LiNO3 und KClO3, geeignet.

Im Falle des Eintauchens erfolgt das Eintauchen bevorzugt für eine Tauchzeit von 60s bis 300s, bevorzugt 120s bis 240s. Eine längere Tauchzeit hat den Vorteil, dass die Reaktion zur Bildung Lithiumhydrotalkit zuverlässig stattfinden kann. Allerdings ist für eine industrielle Fertigung eine kürzere Tauchzeit vorteilhaft, um den Herstellungsprozess effizient zu gestalten. Die genannten Zeiten haben sich in dieser Hinsicht als ein guter Kompromiss erwiesen.

Bei einer bevorzugten Weiterbildung des Verfahrens weist das Stahlflachprodukt beim Applizieren der wässrigen Lösung, insbesondere beim Eintauchen oder Besprühen oder Belegen im Coil-Coating-Verfahren, eine Temperatur von 40 °C bis 100 °C, bevorzugt 50 °C bis 80 °C, auf. Eine höhere Temperatur beschleunigt die chemische Reaktion bei der Schichtbildung, bei einer zu hohen Temperatur verdampft jedoch die wässrige Lösung zu schnell, sodass die Schichtbildung nicht zuverlässig abgeschlossen ist.

Bei einer bevorzugten Variante wird das Stahlflachprodukt vorab einer Aktivierungsbehandlung, analog zu einem Phosphatierprozess, unterzogen. Hierzu wird eine Aktivierungslösung auf Basis von Phosphaten, insbesondere auf Basis von Natriumtitanylphosphat, oder auf Basis von Kupfer auf das Stahlflachprodukt aufgebracht. Geeignete Aktivierungsmittel sind beispielsweise unter den Handelsbezeichnungen SurTec® 145, SurTec® 610 V, SurTec® 615 V, SurTec® 616 V, Fixodine®X, Fixodine®50, Fixodine®50CF (jetzt Bonderite® M-AC 50CF), Fixodine®950 (jetzt Bonderite® M-AC 950), Fixodine®G 3039, Fixodine®C 5020 A, Fixodine®G 5020 B, Fixodine®C 9114, Fixodine®9112, Gardolene® Z26, Gardolene®V 6599, Gardolene® V 6560 A, Gardolene® V 6559, Gardolene® V 6526, Gardolene® V 6522, Gardolene® V 6520, Gardolene® V 6518, Gardolene® V 6513, Prepalene® X ® 163 erhältlich.

Bei einer weiteren Variante der Erfindung umfasst das vollflächige Aufbringen der Absorptionsschicht mindestens einen der folgenden Schritte:

a) Eintauchen des Stahlflachproduktes in eine Kohlenstoffpartikel
umfassende wässrige Dispersion oder
b) Besprühen des Stahlflachproduktes mit einer Kohlenstoffpartikel
umfassenden wässrigen Dispersion oder
c) Belegen des Stahlflachproduktes mit einer Kohlenstoffpartikel
umfassenden wässrigen Dispersion im Coil-Coating-Verfahren oder
d) Belegen des Stahlflachproduktes mit Kohlenstoffpartikeln durch chemische oder physikalische Gasphasenabscheidung.

Durch diese Behandlung wird die wässrige Dispersion mit Kohlenstoffpartikeln gleichmäßig über die gesamte Oberfläche verteilt, sodass sich eine homogene flächendeckende Absorptionsschicht bildet, die Kohlenstoffpartikel umfasst. Alternativ wird die homogene flächendeckende Absorptionsschicht durch chemische oder physikalische Gasphasenabscheidung ausgebildet.

Bei einer bevorzugten Weiterentwicklung des erfindungsgemäßen Verfahrens liegt der pH-Wert der wässrigen Dispersion bei mindestens 8 und maximal 12, insbesondere bei maximal 10. Hierdurch ist sichergestellt, dass es zu einer zu einer guten Benetzbarkeit des Korrosionsschutzüberzugs auf Aluminium-Basis kommt und damit zu einer besonders gleichmäßigen Verteilung der wässrigen Dispersion sowie der darin enthaltenen Kohlenstoffpartikel.

Insbesondere enthält die wässrige Dispersion 1 - 70 Gew.-%, insbesondere 2 - 50 Gew.-% Kohlenstoffpartikel bezogen auf das Gesamtgewicht der wässrigen Dispersion.

Bei einer bevorzugten Weiterbildung des erfindungsgemäßen Verfahrens enthält die wässrige Dispersion zusätzlich mindestens ein Tensid. Hierdurch kann die Stabilität der Dispersion verbessert werden. Ferner wirkt sich die Gegenwart des mindestens einen Tensids in der wässrigen Dispersion auch vorteilhaft auf die Benetzbarkeit des Korrosionsschutzüberzugs auf Aluminium-Basis aus. Durch zusätzliches Hinzufügen mindestens eines Polymers in die wässrige Dispersion kann ferner eine verbesserte Haftung der Absorptionsschicht auf dem Korrosionsschutzüberzug erhalten werden.

Dabei gilt für die jeweilige Ausgestaltung des Tensids und des Polymers das bereits oben im Zusammenhang mit dem erfindungsgemäßen Stahlflachprodukt Ausgeführte entsprechend.

Der Anteil des mindestens einen Tensids an der wässrigen Dispersion beträgt 0 bis 5 Gew.-% bezogen auf das Gesamtgewicht der wässrigen Dispersion. Dabei ist ein Mindestgehalt von 0,1 Gew.-% erforderlich, um die genannten vorteilhaften Wirkungen zu erhalten. Die Zugabe von mehr als 5 Gew.-% wirkt sich ist aus ökonomischen Gründen nicht sinnvoll, da eine Steigerung der vorteilhaften Wirkungen nicht mehr beobachtet werden kann.

Der Anteil des mindestens einen Polymers an der wässrigen Dispersion beträgt 0 bis 50 Gew.-% bezogen auf das Gesamtgewicht der wässrigen Dispersion. Dabei ist ein Mindestgehalt von 1 Gew.-% erforderlich, um die genannten vorteilhaften Wirkungen zu erhalten. Die Zugabe von mehr als 50 Gew.-% wirkt sich wirkt sich nachteilig auf den Reflexionsgrad und die Trocknung der aus der wässrigen Dispersion erhaltenen Absorptionsschicht aus.

Dabei versteht es sich von selbst, dass der Anteil der Kohlenstoffpartikel sowie der Anteil des gegebenenfalls vorhandenen mindestens einen Tensids und des gegebenenfalls zusätzlich vorhandenen mindestens einen Polymers in der wässrigen Dispersion je nach Applikationsart variiert werden kann, um einen gewünschten Anteil des Kohlenstoffpartikels sowie des gegebenenfalls vorhandenen mindestens einen Tensids und des gegebenenfalls zusätzlich vorhandenen mindestens einen Polymers an der trockenen Absorptionsschicht einzustellen. So kann es beispielsweise praxisgerecht sein für ein Eintauchen eine wässrige Dispersion mit einem wesentlich geringeren Anteil an Kohlenstoffpartikeln einzusetzen, während für ein Belegen ein höherer Anteil der Kohlenstoffpartikel in der wässrigen Dispersion erforderlich ist, um den gleichen gewünschten Anteil an Kohlenstoffpartikeln in der trockenen Absorptionsschicht zu erhalten.

Im Falle des Eintauchens gemäß Variante a) des erfindungsgemäßen Verfahrens erfolgt das Eintauchen bevorzugt für eine Tauchzeit von 0,5 bis 30s, bevorzugt 1 bis 5s. Eine längere Tauchzeit hat den Vorteil, dass die Benetzung des Stahlflachprodukts sichergestellt ist. Allerdings ist für eine industrielle Fertigung eine kürzere Tauchzeit vorteilhaft, um den Herstellungsprozess effizient zu gestalten. Die genannten Zeiten haben sich in dieser Hinsicht als ein guter Kompromiss erwiesen.

Bei einer bevorzugten Weiterbildung des Verfahrens weist das Stahlflachprodukt beim Applizieren der wässrigen Dispersion, insbesondere beim Eintauchen oder Besprühen oder Belegen im Coil-Coating-Verfahren oder beim Belegen durch chemische Gasabscheidung, eine Temperatur von 40 °C bis 100 °C, bevorzugt 50 °C bis 80 °C, auf.

Eine höhere Temperatur beschleunigt im Falle des Applizierens der wässrigen Dispersion die Trocknung der Absorptionsschicht und damit die Schichtbildung, bei einer zu hohen Temperatur verdampft jedoch die wässrige Dispersion zu schnell, sodass die Schichtbildung nicht zuverlässig abgeschlossen ist. Für die chemische Gasphasenabscheidung sind die genannten Temperaturbereiche vorteilhaft, um die Reaktionen an der Oberfläche zu beschleunigen.

Im Falle des Belegens gemäß Variante d) des erfindungsgemäßen Verfahrens mittels chemischer Gasphasenabscheidung (CVD) oder physikalischer Gasphasenabscheidung (PVD), kann das Belegen derart ausgeführt werden, dass beispielsweise die Verbrennung von Gas, beispielsweise Methan, Propan, Butan oder Acetylen, an einer heißen Stahlflachproduktoberfläche, die durch den Korrosionsschutzüberzug auf Aluminium-Basis gebildet ist, erfolgt oder das Belegen über eine Flüssigzufuhr-Flammensprühpyrolyse erfolgt, bei der ein Kohlenstoff-haltiger Precursor, beispielsweise Methan, Propan, Butan oder Acetylen, unvollständig verbrannt wird und die dabei erzeugten Kohlenstoffpartikel an der Oberfläche des Stahlflachprodukts anhaften oder das Belegen erfolgt aus einem Kohlenstofftarget, beispielsweise aus Graphit oder amorphem Kohlenstoff, durch ein sputterndes PVD-Verfahren im Vakuum.

Bei einer alternativen bevorzugten Variante des erfindungsgemäßen Verfahrens wird das Stahlflachprodukt vor dem vollflächigen Aufbringen der Absorptionsschicht einer Aktivierungsbehandlung unterzogen, wobei auf den Korrosionsschutzüberzug auf Aluminium-Basis ein Haftungsvermittler aufgetragen wird. Als Haftungsvermittler können dabei dieselben Polymere dienen, die in Bezug auf das erfindungsgemäße Stahlflachprodukt oben bereits ausführlich beschrieben wurden. Dabei sind die dort beschriebenen Ausgestaltungen dieser Polymere auf das erfindungsgemäße Verfahren analog anwendbar. Durch das Aufbringen einer haftungsvermittelnden Schicht auf den Korrosionsschutzüberzug kann eine besonders gute Haftung der in der Absorptionsschicht enthaltenen Kohlenstoffpartikel auch dann gewährleistet werden, wenn diese über CVD oder PVD aufgebracht werden.

Die Erfindung betrifft ferner ein Verfahren zum Herstellen eines Blechformteils umfassend folgende Arbeitsschritte:

a) Bereitstellen eines Blechzuschnitts aus einem zuvor erläuterten Stahlflachprodukt

b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Wampressformen vorgesehenes Umformwerkzeug (Arbeitsschritt c)) zumindest teilweise eine Temperatur oberhalb von Ms+100°C aufweist, wobei Ms die der Martensitstarttemperatur bezeichnet;

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

e) Entnehmen des auf die Zieltemperatur abgekühlten Blechformteils aus dem Werkzeug.

Beim erfindungsgemäßen Verfahren wird somit ein Zuschnitt, der aus einem entsprechend den voranstehenden Erläuterungen in geeigneter Weise zusammengesetzten Stahl und einer Beschichtung (Korrosionsschutzüberzug und Absorptionsschicht) besteht, bereitgestellt (Arbeitsschritt a)), der dann in an sich bekannter Weise so erwärmt wird, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C beträgt.

Dadurch, dass im zweiten Bereich eine Absorptionsschicht angeordnet ist und der der Reflexionsgrad $\overline{R}$ im Infrarotbereich im zweiten Bereich kleiner ist als 0,55, während der Reflexionsgrad $\overline{R}$ im Infrarotbereich im ersten Bereich größer ist als 0,55, kommt es zu einer gleichmäßigen Erwärmung des Blechzuschnitts in den dickeren, zweiten Bereichen und dünneren, ersten Bereichen.

Unter teilweisem Überschreiten einer Temperatur (hier AC3 bzw. Ms+100 °C) wird im Sinne dieser Anmeldung verstanden, dass mindestens 30%, insbesondere mindestens 60 %, des Volumens des Zuschnitts eine entsprechende Temperatur überschreiten.

Beim Einlegen in das Umformwerkzeug weist also mindestens 30 % des Zuschnitts ein austenitisches Gefüge auf, d.h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. In dem Teil des Zuschnittmaterials, dessen Temperatur niedriger bleibt, entsteht im Zuge der Umformung im Werkzeug kein oder nur deutlich weniger Martensit, sodass das Gefüge dort deutlich weicher ist als in den jeweils anderen Teilen, in denen ein martensitisches Gefüge vorliegt. Auf diese Weise kann im jeweils geformten Blechformteil gezielt ein weicherer Bereich eingestellt werden, indem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen Ac3 und 1000 °C, bevorzugt zwischen 850 °C und 950 °C liegt.

Dabei ist die zu überschreitende Mindesttemperatur Ac3 gemäß der von HOUGARDY, HP. in Werkstoffkunde Stahl, Band 1: Grundlagen, Verlag Stahleisen GmbH, Düsseldorf, 1984, p. 229., angegebenen Formel

$$Ac3 = (902 - 225*\%C + 19*\%Si - 11*\%Mn - 5*\%Cr + 13*\%Mo - 20*\%Ni + 55*\%V) \ °C$$

mit %C = jeweiliger C-Gehalt, %Si = jeweiliger Si-Gehalt, %Mn = jeweiliger Mn-Gehalt, %Cr = jeweiliger Cr-Gehalt, %Mo = jeweiliger Mo-Gehalt, %Ni =jeweiliger Ni-Gehalt und %V = jeweiliger V-Gehalt des Stahls, aus dem der Zuschnitt besteht, bestimmt.

Eine optimal gleichmäßige Eigenschaftsverteilung lässt sich dadurch erreichen, dass der Zuschnitt im Arbeitsschritt b) vollständig durcherwärmt wird.

Bei einer bevorzugten Ausführungsvariante beträgt die mittlere Aufheizgeschwindigkeit $r_{Ofen}$ des Blechzuschnittes beim Erwärmen in Schritt b) mindestens 3 K/s, bevorzugt mindestens 5 K/s, insbesondere mindestens 10 K/s, bevorzugt mindestens 15 K/s. Die mittlere Aufheizgeschwindigkeit $r_{Ofen}$ ist dabei als mittlere Aufheizgeschwindigkeit von 30°C auf 700°C zu verstehen.

Bei einer bevorzugten Ausführungsvariante erfolgt die Erwärmung in einem Ofen mit einer Ofentemperatur $T_{Ofen}$ von mindestens 850 °C, bevorzugt mindestens 880 °C, besonders bevorzugt mindestens 900 °C, insbesondere mindestens 920 °C, und maximal 1000 °C, bevorzugt maximal 950 °C, besonders bevorzugt maximal 930 °C.

Bevorzugt beträgt der Taupunkt im Ofen beträgt hierbei mindestens -20 °C, bevorzugt mindestens -15 °C, insbesondere mindestens -5 °C, besonders bevorzugt mindestens 0 °C, insbesondere mindestens 5 °C und maximal +25 °C, bevorzugt maximal +20 °C insbesondere maximal +15 °C.

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850 °C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C.

Die Gesamtzeit im Ofen $t_{Ofen}$, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von Ac3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen handeln kann, entnommen und so schnell in das Umformwerkzeug transportiert, dass seine Temperatur beim Eintreffen in dem Werkzeug zumindest teilweise oberhalb von Ms+100 °C liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der AC1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb von vorzugsweise höchstens 20s, insbesondere von maximal 15s absolviert. Ein derart schneller Transport ist erforderlich, um eine zu starke Abkühlung vor der Verformung zu vermeiden.

Das Werkzeug besitzt beim Einlegen des Zuschnitts typischerweise eine Temperatur zwischen Raumtemperatur (RT) und 200 °C, bevorzugt zwischen 20 °C und 180 °C, insbesondere zwischen 50 °C und 150 °C. Optional kann das Werkzeug in einer besonderen Ausführungsform zumindest bereichsweise auf eine Temperatur $T_{WZ}$ von mindestens 200 °C, insbesondere mindestens 300 °C temperiert sein, um das Bauteil nur partiell zu härten. Weiterhin beträgt die Werkzeugtemperatur Twz bevorzugt maximal 600 °C, insbesondere maximal 550 °C. Es ist lediglich sicherzustellen, dass die Werkzeugtemperatur Twz unterhalb der gewünschten Zieltemperatur $T_{Ziel}$ liegt. Die Verweilzeit im Werkzeug twz beträgt bevorzugt mindestens 2s, insbesondere mindestens 3s, besonders bevorzugt mindestens 5s. Maximal beträgt die Verweilzeit im Werkzeug bevorzugt 25s, insbesondere maximal 20s.

Die Zieltemperatur $T_{Ziel}$ des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150 °C. Alternativ liegt die Zieltemperatur $T_{Ziel}$ des Blechformteils besonders bevorzugt unter Ms-50 °C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die Martensitstarttemperatur eines im Rahmen der erfindungsgemäßen Vorgaben liegenden Stahls ist gemäß der Formel:

Ms [°C] = (490,85 - 302,6 %C - 30,6 %Mn - 16,6 %Ni - 8,9 %Cr + 2,4 %Mo - 11,3 %Cu + 8,58 %Co + 7,4 %W - 14,5 %Si) [°C/Gew.-%]

zu berechnen, wobei hier mit C% der C-Gehalt, mit %Mn der Mn-Gehalt, mit %Mo der Mo-Gehalt, mit %Cr der Cr-Gehalt, mit %Ni der Ni-Gehalt, mit %Cu der Cu-Gehalt, mit %Co der Co-Gehalt, mit %W der W-Gehalt und mit %Si der Si-Gehalt des jeweiligen Stahls in Gew.-% bezeichnet sind.

Die AC1-Temperatur und die AC3-Temperatur eines im Rahmen der erfindungsgemäßen Vorgaben liegenden Stahls ist gemäß den Formeln:

AC1 [°C] = (739 - 22*%C - 7*%Mn + 2*%Si + 14*%Cr + 13*%Mo - 13*%Ni + 20*%V) [°C/Gew.- %]

AC3[°C] = (902 - 225*%C + 16*%Si - 11*%Mn - 5*%Cr + 13*%Mo - 20*%Ni + 55*%V) [°C/Gew.- %]

zu berechnen, wobei auch hiermit mit %C der C-Gehalt, mit %Si der Si-Gehalt mit %Mn der Mn-Gehalt mit %Cr der Cr-Gehalt, mit °/oMo der Mo-Gehalt, mit %Ni der Ni-Gehalt und mit +%V der Vanadium-Gehalt des jeweiligen Stahls bezeichnet sind (Brandis H 1975 TEW-Techn. Ber. 1 8-10)

Im Werkzeug wird der Zuschnitt somit nicht nur zu dem Blechformteil geformt, sondern gleichzeitig auch die Zieltemperatur abgeschreckt. Die Abkühlrate im Werkzeuge rwz auf die Zieltemperatur beträgt insbesondere mindestens 20 K/s, bevorzugt mindestens 30 K/s, insbesondere mindestens 50 K/s, in besonderer Ausführung mindestens 100 K/s.

Nach dem Entnehmen des Blechformteils in Schritt e) erfolgt ein Abkühlen des Blechformteils auf eine Abkühltemperatur $T_{AB}$ von weniger als 100 °C innerhalb einer Abkühldauer $t_{AB}$ von 0,5 bis 600s. Dies geschieht im Regelfall durch eine Luftabkühlung.

Bei dem erfindungsgemäßen Blechformteil handelt es sich bevorzugt um ein Bauteil für ein Landfahrzeug, Seefahrzeug oder Luftfahrzeug. Besonders bevorzugt handelt es sich um ein Automobilteil, insbesondere um ein Karrosserieteil. Bevorzugt ist das Bauteil eine B-Säule, Längsträger, A-Säule, Schweller oder Querträger.

Im Folgenden wird die Erfindung anhand von Ausführungsbeispielen näher erläutert.

Zum Nachweis der Wirkung der Erfindung wurden mehrere Versuche durchgeführt. Dazu wurden Blechlzuschnitte mit einer Stahlzusammensetzung gemäß Tabelle 1 mittels Schmelztauchbeschichten mit einem Korrosionsschutzüberzug auf Al-Basis beschichtet. Die Schmelzenanalyse ist in Tabelle 2 angegeben. Der sich ergebende Korrosionsschutzüberzug wies jeweils eine Al-Basisschicht auf, deren Zusammensetzung der Schmelzenanalyse entspricht. Die einseitige Dicke und das Auflagengewicht des Korrosionsschutzüberzuges sind ebenfalls in Tabelle 2 aufgeführt. Von den so bereitgestellten Stahlzuschnitten blieben das Beispiel 1 und 4 unbehandelt und dienen als Referenz. Die Blechzuschnitte 2 und 3 wurden phosphatiert mit einer Phosphatierungslösung, deren Zusammensetzung und deren ph-Wert in Tabelle 4 angegeben ist. Die Kontaktzeit ist ebenfalls in Tabelle 4 angegeben. Im Ergebnis erhält man eine Auflage mit einem Auflagengewicht und einem Bedeckungsgrad vor und nach Warmumformung wie in Tabelle 4 angegeben. Es wurde bewusst zum Nachweis der Erfindung eine Phosphatierungsvariante mit besonders hohem Bedeckungsgrad gewählt, um den Effekt der Erfindung zu verdeutlichen. Die anderen in der EP-Anmeldung mit der Anmeldenummer 23 164 640.7 genannten Phosphatierungsvarianten mit teilweise geringeren Bedeckungsvarianten sind ebenfalls möglich. Auf die Blechzuschnitte 5 und 6 wurde eine Absorptionsschicht aus Kohlenstoffpartikeln aufgebracht. Hierzu wurden die Blechzuschnitte 5 und 6 mit einer Kohlenstoffpartikel umfassenden wässrigen Dispersion im Coil-Coating Verfahren belegt. Die Eigenschaften der wässrigen Dispersion sind in Tabelle 5 angegeben. Im Ergebnis ergibt sich eine Schicht mit einem Auflagengewicht von 0,7 g/m2 und einer Schichtdicke von 0.39$\mu$m. Alternative Beschichtungsvarianten mit Kohlenstoffpartikeln können der DE 10 2022 127 696.1 entnommen werden. Die Blechzuschnitte 7 und 8 wurden als weitere Variante mit einer Lithium Aluminium Hydroxide enthaltenden Absorptionsschicht beschichtet. Hierzu wurden die Blechzuschnitte mit einer Lithiumcarbonat umfassenden wässrigen Lösung behandelt, um eine Absorptionsschicht auf dem Korrosionsschutzüberzug zu erzeugen. Die Lösung enthielt dabei 13g/L Li2CO3 (gesättigte Lösung) und 2g/L LiOH. Der pH-Wert der Lösung betrug 12. Dabei wurden die Blechzuschnitte in die wässrige Lösung für eine Tauchzeit eingetaucht. In Tabelle 6 sind die Details der Behandlungsmethode jeweils angegeben. Dies sind die Aufbringmethode, der pH-Wert der wässrigen Lösung, die Tauchzeit und die Temperatur der Blechzuschnitte während der Behandlung. Weiterhin ist in Tabelle 6 das sich ergebende Auflagengewicht der Absorptionsschicht angegeben. Andere Varianten für solche Schichten und deren Aufbringungsmethode können der DE 10 2021 128 545 A1 entnommen werden.

Anschließend wurden die Blechzuschnitte 1, 2, 5 und 7 von einer Ausgangsdicke von 4,5 mm auf eine Dicke von 3,5 mm gewalzt. Der Abwalzgrad betrug also 22%. Dagegen wurden die Blechzuschnitte 3, 4, 6 und 8 von der Ausgangsdicke von 4,5 mm auf eine Dicke von 1,25 mm gewalzt. Der Abwalzgrad betrug also 72%. Im Nachgang wurde der mittlere Reflexionsgrad $\overline{R}$ im Infrarotbereich für alle Blechzuschnitte bestimmt. Die beiden Blechzuschnitte 1 und 4 ohne Absorptionsschicht weisen den erwarteten mittleren Reflexionsgrad $\overline{R}$ von 0,67 bzw. 0,66 auf. Bei dem Blechzuschnitt 2, der eine Phosphatierung ein Walzen mit einem geringen Abwalzgrad erfahren hat, ist der mittlere Reflexionsgrad $\overline{R}$ im Infrarotbereich deutlich vermindert und beträgt nur 0.3. Dagegen beträgt beim Blechzuschnitt 3, der zunächst auf identische Weise phosphatiert wurde und anschließend mit einem Abwalzgrad von 72 % gewalzt wurde, der Reflexionsgrad $\overline{R}$ 0,64. Damit ist der Reflektionsgrad beinahe wieder auf seinem Referenzwert ohne Absorptionsschicht. Durch das Abwalzen mit einem Walzgrad von 72 % ist die Absorptionseigenschaft nahezu vollständig zerstört worden. Dies liegt zum Einen daran, dass durch die starke Beanspruchung beim Walzen die Hopeitkristalle der Phosphatschicht zerstört werden. Zum Anderen kommt es zu einem mechanischen Abrieb der Schicht, wodurch der ursprüngliche, schlecht absorbierende Überzug wieder mehr an der direkten Oberfläche vorliegt. Das gleiche Verhalten zeigt sich bei den Blechzuschnitten 5 und 6, die eine Absorptionsschicht mit Kohlenstoffpartikeln aufweisen. Während beim Blechzuschnitt 5, der einen Abwalzgrad von 22 % erfahren hat, der mittlere Reflexionsgrad $\overline{R}$ im Infrarotbereich deutlich vermindert ist und nur 0.17 beträgt, zeigt der Blechzuschnitt 6 mit einem Abwalzgrad von 72 % einen beinahe unveränderten mittleren Reflexionsgrad $\overline{R}$ im Infrarotbereich von 0.63. Auch hier kommt es zu einem mechanischen Abrieb der Schicht, wodurch der ursprüngliche, schlecht absorbierende Überzug wieder mehr an der direkten Oberfläche vorliegt. Das gleiche Verhalten sieht man ebenso bei den Blechzuschnitten 7 und 8. Beim geringen Abwalzgrad ist der mittlere Reflexionsgrad $\overline{R}$ im Infrarotbereich deutlich vermindert und beim hohen Abwalzgrad erhält man wieder etwa den Reflexionsgrad ohne Absorptionsschicht. Bei den Blechzuschnitten 7 und 8 ergibt sich dieses Verhalten ebenso aus dem mechanischen Abrieb aber auch aus der Zerstörung der Talkitkristalle.

**Tabelle 1 (Stahlsorten)**

| Stahl | C | Si | Mn | Al | Cr | Nb | Ti | B | P | S | N | Sn | As | Cu | Mo | Ca | Andere |
|---|---|---|---|---|---|---|---|---|---|---|---|---|---|---|---|---|---|
| A | 0,235 | 0,3 | 1,3 | 0,05 | 0,28 | 0,003 | 0,04 | 0,0035 | 0,02 | 0,003 | 0,007 | 0,03 | 0,01 | 0,03 | 0,03 | 0,005 | |
| Rest Eisen und unvermeidbare Verunreinigungen. Angaben jeweils in Gew.-% | | | | | | | | | | | | | | | | | |

**Tabelle 2 (Eigenschaften Stahlflachprodukt)**

| Schmelzenanalyse | | | | | d [mm] (vor dem Walzen) | Schichtdicke [μm] |
|---|---|---|---|---|---|---|
| Si | Fe | Mg | Sonstige | Al | | |
| 8,2 | 3,8 | 0,25 | <1% | Rest | 4,5 | 28 |

**Tabelle 3 (Absorptionsschichtvarianten)**

| Versuch | Stahlsorte | Absorptionsschicht | d [mm] (nach dem Walzen) | AWG [%] | mittlerer Reflexionsgrad $\overline{R}$ im Infrarotbereich |
|---|---|---|---|---|---|
| 1* | A | - | 3,5 | 22% | 0,67 |
| 2 | A | Phosphatschicht | 3,5 | 22% | 0.3 |
| 3 | A | Phosphatschicht | 1,25 | 72% | 0.64 |
| 4* | A | - | 1,25 | 72% | 0.66 |
| 5 | A | Carbon Black | 3,5 | 22% | 0,17 |
| 6 | A | Carbon Black | 1,25 | 72% | 0,63 |
| 7 | A | Li-Hydrotalkit | 3,5 | 22% | 0,35 |
| 8 | A | Li-Hydrotalkit | 1,25 | 72% | 0,66 |

**Tabelle 4 (Phosphatierung)**

| Phosphatierungslösung Konzentrationen [g/L] | | | | | | pH-Wert | Kontaktzeit [s] | Auflage [g/m$^2$] | Bedeckungsgrad |
|---|---|---|---|---|---|---|---|---|---|
| Zn | Ni | Cu | Polyethylenglykol | Nitrat | Fluoride | | | | |
| 1,5 | 0,9 | - | - | 2,9 | 1,25 | 3,0 | 180 | 2,8 | 98 |

**Tabelle 5 (Kohlenstoffpartikel)**

| Schichtdicke (μm) | Auftragsgewicht [g/m²] | Anteil Kohlenstoff-partikel in Dispersion [Gew.-%] | Anteil Tensid in Dispersion [Gew.-%] | Anteil Polymer in Dispersion [Gew.-%] | Applikationsmethode | Tauchzeit [s] | Temperatur des Stahlflach-produkts [°C] | pH-Wert |
|---|---|---|---|---|---|---|---|---|
| 0,39 | 0,7 | 20 | 0,15 | 1,5 | Coil-Coating | <2 | 30 | 9 |

**Tabelle 6 (Li-Hydrotalkit)**

| Auflagengewicht [mg/m$^2$] | Aufbringmethode | pH-Wert | Tauchzeit [s] | Temperatur [°C] |
|---|---|---|---|---|
| 106 | Eintauchen | 12 | 120 | 60 |

**Patentansprüche**

1. Stahlflachprodukt zur Herstellung eines Stahlbauteils durch Warmumformen, umfassend ein Stahlsubstrat, das aus einem Stahl, der 0,1 - 3 Gew.-% Mn und optional bis zu 0,01 Gew.-% B aufweist, besteht, und einen auf dem Stahlsubstrat aufliegenden Korrosionsschutzüberzug auf Aluminium-Basis, wobei das Stahlflachprodukt einen ersten Bereich mit einer ersten Dicke $d_1$ und einen zweiten Bereich mit einer zweiten Dicke $d_2$ aufweist, wobei die zweite Dicke größer ist als die erste Dicke **dadurch gekennzeichnet, dass** auf dem Korrosionsschutzüberzug im zweiten Bereich eine Absorptionsschicht angeordnet ist, sodass der mittlere Reflexionsgrad $\overline{R}$ im Infrarotbereich im zweiten Bereich kleiner ist als im ersten Bereich.

2. Stahlflachprodukt nach Anspruch 1, **dadurch gekennzeichnet, dass** der Reflexionsgrad $\overline{R}$ im Infrarotbereich im zweiten Bereich kleiner ist als 0,55, bevorzugt kleiner ist als 0,50, insbesondere kleiner ist als 0,40, bevorzugt kleiner ist als 0,35 und der Reflexionsgrad $\overline{R}$ im Infrarotbereich im ersten Bereich größer ist als 0,55, bevorzugt größer ist als 0,60.

3. Stahlflachprodukt nach einem der Ansprüche 1 oder 2, **dadurch gekennzeichnet, dass** die Absorptionsschicht Kohlenstoffpartikel, insbesondere ausgewählt aus der Gruppe bestehend aus Graphit, Fullerenen, Graphen, Kohlenstoffnanoröhren sowie deren Mischungen, umfasst oder Lithium Aluminium Hydroxide, insbesondere Lithiumhydrotalkit ($[LiAl_2(OH)_6]_2(CO_3) \cdot 4H_2O$) umfasst oder Metallphosphate umfasst, wobei der Bedeckungsgrad mit Metallphosphaten bevorzugt mindestens 10 % beträgt.

4. Stahlflachprodukt nach einem der Ansprüche 1 bis 3 **dadurch gekennzeichnet, dass** die erste Dicke maximal 2,5 mm, bevorzugt maximal 2,0 mm, insbesondere maximal 1,5 mm beträgt und/oder die zweite Dicke mindestens 2,0 mm, bevorzugt mindestens 2,5 mm, insbesondere mindestens 3,0 mm beträgt.

5. Stahlflachprodukt nach einem der Ansprüche 1 bis 4, **dadurch gekennzeichnet, dass** der Korrosionsschutzüberzug auf Aluminium-Basis eine Al-Basisschicht aufweist, die aus 1,0 - 15 Gew.-% Si, optional 2 - 4 Gew.-% Fe, optional bis zu 5 Gew.-% Alkali- oder Erdalkalimetallen, optional bis zu 15 Gew.-% Zn und optionalen weiteren Bestandteilen, deren Gehalte in Summe auf höchstens 2,0 Gew.-% beschränkt sind, und als Rest Aluminium, besteht.

6. Verfahren zur Herstellung eines Stahlflachproduktes, insbesondere nach einem der Ansprüche 1 bis 5, umfassend folgende Arbeitsschritte:

   a) Bereitstellen eines Stahlflachproduktes umfassend ein Stahlsubstrat, das aus einem Stahl, der 0,1 - 3 Gew.-% Mn und optional bis zu 0,01 Gew.-% B aufweist, besteht, und einen auf dem Stahlsubstrat aufliegenden Korrosionsschutzüberzug auf Aluminium-Basis,
   b) Optionales Dressieren des Stahlflachproduktes,
   c) Vollflächiges Aufbringen einer Absorptionsschicht auf den Korrosionsschutzüberzug,
   d) Walzen des Stahlflachprodukt, wobei der Abwalzgrad in einem ersten Bereich mindestens 30 %, bevorzugt mindestens 50 %, beträgt und in einem zweiten Bereich kleiner ist als 30 %.

7. Verfahren nach Anspruch 6, **dadurch gekennzeichnet, dass** das vollflächige Aufbringen der Absorptionsschicht die folgenden Teilschritte umfasst:

   a) Optionales Reinigen des Stahlflachprodukts
   b) Optionales Aktivieren des Stahlflachprodukts
   c) Phosphatieren des Stahlflachprodukts mit einer Phosphatierungslösung
   d) Optional alkalisches Reinigen des Stahlflachproduktes
   e) Optional Beölen des Stahlflachprodukts

8. Verfahren nach Anspruch 7 **dadurch gekennzeichnet, dass** der pH-Wert der Phosphatierungslösung mindestens gleich 2,0 und maximal 3,5 beträgt und/oder die Summe der Zinkkonzentration und der Nickelkonzentration in der Phosphatierungslösung mindestens 2,4 g/l beträgt und/oder die Kupferkonzentration in der Phosphatierungslösung mindestens 0,01 g/l beträgt.

9. Verfahren nach Anspruch 6 **dadurch gekennzeichnet, dass** das vollflächige Aufbringen der Absorptionsschicht mindestens einen der folgenden Schritte umfasst:

a) Applizieren einer Lithiumcarbonat ($Li_2CO_3$) umfassenden wässrigen Lösung auf das Stahlflachprodukt, insbesondere Eintauchen des Stahlflachproduktes in eine Lithiumcarbonat umfassende wässrige Lösung oder
b) Besprühen des Stahlflachproduktes mit einer Lithiumcarbonat umfassenden wässrigen Lösung oder
c) Belegen des Stahlflachproduktes mit einer Lithiumcarbonat umfassenden wässrigen Lösung im Coil-Coating-Verfahren.

10. Verfahren nach Anspruch 6 **dadurch gekennzeichnet, dass** das vollflächige Aufbringen der Absorptionsschicht mindestens einen der folgenden Schritte umfasst:

a) Eintauchen des Stahlflachproduktes in eine Kohlenstoffpartikel
umfassende wässrige Dispersion oder
b) Besprühen des Stahlflachproduktes mit einer Kohlenstoffpartikel
umfassenden wässrigen Dispersion oder
c) Belegen des Stahlflachproduktes mit einer Kohlenstoffpartikel
umfassenden wässrigen Dispersion im Coil-Coating-Verfahren oder
d) Belegen des Stahlflachproduktes mit Kohlenstoffpartikeln durch chemische oder physikalische Gasphasenabscheidung.

11. Verfahren zum Herstellen eines Blechformteils umfassend folgende Arbeitsschritte:

a) Bereitstellen eines Blechzuschnitts aus einem Stahlflachprodukt nach einem der Ansprüche 1 bis 5;
b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100 °C aufweist, wobei Ms die der Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20s, bevorzugt höchstens 15s, beträgt;
d) Warmpressformen des Blechzuschnitts zu dem Blechformteil, wobei der Zuschnitt im Zuge des Warmpressformens über eine Dauer $t_{WZ}$ von mehr als 1s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;
e) Entnehmen des auf die Zieltemperatur $T_{Ziel}$ abgekühlten Blechformteils aus dem Werkzeug.

Europäisches
Patentamt

European
Patent Office

Office européen
des brevets

# EUROPÄISCHER RECHERCHENBERICHT

**Nummer der Anmeldung**

EP 24 17 6916

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2021/074388 A1 (THYSSENKRUPP STEEL EUROPE AG [DE]) 22. April 2021 (2021-04-22) * Seite 16, letzter Absatz bis Seite 18, erster Absatz; Ansprüche 1-11 * ----- | 1-11 | INV. B32B15/01 C22C38/02 C22C38/04 C22C38/06 C22C38/12 C22C38/14 |
| A | JP 2011 149084 A (NIPPON STEEL CORP) 4. August 2011 (2011-08-04) * Absatz [0010]; Ansprüche 1-5 * ----- | 1-11 | C22C38/22 C22C38/26 C22C38/28 C22C38/32 |
| A | US 2017/268078 A1 (SANADRES MICHEL [FR] ET AL) 21. September 2017 (2017-09-21) * Ansprüche 1-17 * ----- | 1-11 | C22C38/38 C23C22/07 B21D22/22 C21D1/70 |
| A | CN 106 676 438 A (UNIV HUAZHONG SCIENCE TECH) 17. Mai 2017 (2017-05-17) * Absatz [0027]; Ansprüche 1-10 * ----- | 1-11 | ADD. C23C2/12 |

**RECHERCHIERTE SACHGEBIETE (IPC)**

B32B
C22C
C23C
B21D
C21D

Der vorliegende Recherchenbericht wurde für alle Patentansprüche erstellt

| Recherchenort | Abschlußdatum der Recherche | Prüfer |
|---|---|---|
| Den Haag | 15. Oktober 2024 | Pircher, Ernst |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 6916

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2024

| Im Recherchenbericht angeführtes Patentdokument | Datum der Veröffentlichung | Mitglied(er) der Patentfamilie | Datum der Veröffentlichung |
|---|---|---|---|
| WO 2021074388 A1 | 22-04-2021 | DE 102019128238 A1 | 22-04-2021 |
| | | EP 4045314 A1 | 24-08-2022 |
| | | WO 2021074388 A1 | 22-04-2021 |
| JP 2011149084 A | 04-08-2011 | JP 5573195 B2 | 20-08-2014 |
| | | JP 2011149084 A | 04-08-2011 |
| US 2017268078 A1 | 21-09-2017 | BR 112016022592 A2 | 15-08-2017 |
| | | CA 2941331 A1 | 08-10-2015 |
| | | CN 106164184 A | 23-11-2016 |
| | | EP 3126459 A1 | 08-02-2017 |
| | | ES 2692819 T3 | 05-12-2018 |
| | | HU E040303 T2 | 28-02-2019 |
| | | JP 6397047 B2 | 26-09-2018 |
| | | JP 2017518438 A | 06-07-2017 |
| | | KR 20160118374 A | 11-10-2016 |
| | | MA 39281 A1 | 30-12-2016 |
| | | PL 3126459 T3 | 31-12-2018 |
| | | RU 2641279 C1 | 16-01-2018 |
| | | TR 201815330 T4 | 21-11-2018 |
| | | UA 114875 C2 | 10-08-2017 |
| | | US 2017016086 A1 | 19-01-2017 |
| | | US 2017268078 A1 | 21-09-2017 |
| | | US 2019153560 A1 | 23-05-2019 |
| | | US 2019185959 A1 | 20-06-2019 |
| | | US 2020263272 A1 | 20-08-2020 |
| | | WO 2015150848 A1 | 08-10-2015 |
| | | WO 2015150892 A1 | 08-10-2015 |
| | | ZA 201605204 B | 30-08-2017 |
| CN 106676438 A | 17-05-2017 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019076720 A1
- WO 2012120081 A2
- DE 102022127696
- DE 102021128545
- DE 102021128545 A1

**In der Beschreibung aufgeführte Nicht-Patentliteratur**

- **HOUGARDY, HP.** Werkstoffkunde Stahl. Verlag Stahleisen GmbH, 1984, vol. 1, 229
- **BRANDIS H.** *TEW-Techn. Ber.,* 1975, vol. 1, 8-10